(19) Europäisches Patentamt / European Patent Office / Office européen des brevets

(11) **EP 4 712 160 A1**

(12) **EUROPEAN PATENT APPLICATION**
published in accordance with Art. 153(4) EPC

(43) Date of publication:
**18.03.2026 Bulletin 2026/12**

(21) Application number: 23937219.6

(22) Date of filing: **16.10.2023**

(51) International Patent Classification (IPC):
**H01M 4/36** (2006.01)    **H01M 10/0525** (2010.01)

(52) Cooperative Patent Classification (CPC):
Y02E 60/10

(86) International application number:
**PCT/CN2023/124793**

(87) International publication number:
**WO 2024/234544 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.05.2023 CN 202310542575**

(71) Applicants:
• **Contemporary Amperex Technology Co., Limited**
  **Ningde, Fujian 352100 (CN)**
• **Hunan Yuneng New Energy Battery Materials Co., Ltd.**
  **Xiangtan, Hunan 411100 (CN)**

(72) Inventors:
• **BIE, Changfeng**
  **Ningde, Fujian 352100 (CN)**
• **CHEN, Tao**
  **Ningde, Fujian 352100 (CN)**
• **YIN, Xiang**
  **Ningde, Fujian 352100 (CN)**
• **DONG, Miaomiao**
  **Ningde, Fujian 352100 (CN)**
• **LIU, Hongyu**
  **Ningde, Fujian 352100 (CN)**
• **NI, Huan**
  **Ningde, Fujian 352100 (CN)**

(74) Representative: **Gong, Jinping**
**CocreateIP**
**Neumarkter Straße 21**
**81673 München (DE)**

(54) **POSITIVE ELECTRODE SHEET AND PREPARATION METHOD THEREFOR, SECONDARY BATTERY, AND ELECTRICAL DEVICE**

(57)    A positive electrode plate, a preparation method thereof, a secondary battery, and an electric apparatus are provided. The positive electrode plate includes a current collector and a positive electrode film layer disposed on at least one side of the current collector, where the positive electrode film layer includes a positive electrode active material, and the positive electrode active material includes a substrate and a carbon coating layer disposed on a surface of the substrate. The substrate has a general formula $Li_zFe_xMn_{(1-x-y)}M_yPO_4$, where $1 \leq z \leq 1.1$; $0.5 \leq x \leq 1$; $0 \leq y \leq 0.1$; and M is at least one selected from Ti, V, and Mg. At least a portion of the positive electrode active material includes primary particles, and a particle size distribution of primary particles having a primary particle size greater than 80 nm and less than or equal to 180 nm in the positive electrode active material is less than or equal to 10%; and there are no more than 15 primary particles having a primary particle size greater than 1500 nm in a region of $(250 \pm 5)$ $\mu m^2$ in a cross section obtained by cutting an electrode plate prepared from the positive electrode active material. The primary particle size distribution concentration of the positive electrode active material in the positive electrode plate provided by this application is significantly improved, improving the cycling performance of batteries.

FIG. 2

EP 4 712 160 A1

**Description**

**CROSS-REFERENCE TO RELATED APPLICATIONS**

This application claims priority to Chinese Patent Application No. 202310542575.5, filed on May 15, 2023 and entitled "POSITIVE ELECTRODE ACTIVE MATERIAL, PREPARATION METHOD THEREOF, POSITIVE ELECTRODE PLATE, SECONDARY BATTERY, AND ELECTRIC APPARATUS", which is incorporated herein by reference in its entirety.

**TECHNICAL FIELD**

This application relates to the field of secondary battery technology, in particular to a positive electrode plate, a preparation method thereof, a secondary battery, and an electric apparatus.

**BACKGROUND**

With stable structures and excellent cycle life, olivine phosphate-based positive electrode materials are positive electrode active materials widely used in secondary batteries. With increasing performance requirements for secondary batteries in the field of energy storage applications, how to improve the cycling performance of olivine phosphate-based positive electrode active materials is a scientific and technological issue to be urgently addressed in the field of current energy storage applications. One of the factors affecting the cycling performance of positive electrode active materials is the presence of fine powder in the positive electrode active materials, and rapid cycle life degradation limits further improvement in the cycling performance of the positive electrode active materials.

Currently, methods to reduce fine powder in positive electrode active materials often focus on optimizing production processes and devices to reduce the generation of fine powder particles during mixing or transportation of the materials. These methods can reduce the generation of fine powder particles to some extent, but the effect is minimal. Alternatively, cyclone separation devices are used to remove fine powder particles from the materials, but the results are unsatisfactory. Especially, it is difficult for a lithium iron phosphate or lithium iron manganese phosphate nanomaterial to be effectively separated at a high yield.

Additionally, oversized single-crystal particles present in positive electrode active materials affect the mechanical integrity of the positive electrode active material particles and also affect the cycling performance of the positive electrode active materials.

Therefore, it is urgent to reduce the content of fine powder and oversized single-crystal particles in positive electrode active materials to improve the particle uniformity of the positive electrode active materials.

**SUMMARY**

This application aims to address at least one of the technical issues existing in the background. In view of this, an objective of this application is to provide a positive electrode plate. The positive electrode plate includes a phosphate-based positive electrode active material. Compared to conventional phosphate-based positive electrode active nanomaterials, this material exhibits a significantly different primary particle distribution, which has uniform distribution and a low proportion of fine powder and large particles, thereby improving the cycling and high-temperature storage performance of the phosphate-based positive electrode active material.

According to a first aspect, this application provides a positive electrode plate including a current collector and a positive electrode film layer disposed on at least one side of the current collector, where the positive electrode film layer includes a positive electrode active material, and the positive electrode active material includes a substrate and a carbon coating layer disposed on a surface of the substrate. The substrate has a general formula $Li_zFe_xMn_{(1-x-y)}M_yPO_4$, where $0.5 \leq x \leq 1$, $0 \leq y \leq 0.1$, $1 \leq z \leq 1.1$, and M is at least one selected from Ti, V, and Mg. At least a portion of the positive electrode active material includes primary particles, and a particle size distribution of primary particles having a primary particle size greater than 80 nm and less than or equal to 180 nm in the positive electrode active material is less than or equal to 10%.

In the positive electrode active material of the positive electrode plate provided by this application, controlling the particle size distribution of primary particles having a primary particle size greater than 80 nm and less than or equal to 180 nm within a suitable range in the positive electrode active material powder helps to reduce or mitigate the cycle life degradation of a small-particle positive electrode active material in the positive electrode active material, and slow down a rate of side reactions between the fine powder surface and the electrolyte, thereby prolonging the cycle life of the positive electrode active material.

In some embodiments, the particle size distribution of primary particles having a primary particle size greater than 80 nm and less than or equal to 180 nm in the positive electrode active material is less than or equal to 8.5%, optionally less than or equal to 8%, 6%, 5%, or 2%.

In some embodiments, in the positive electrode active material, there are no more than 15 primary particles having a primary particle size greater than 1500 nm in a region of approximately 250 $\mu m^2$ in a cross section obtained by cutting the positive electrode plate, optionally no more than 12, 8, or 6 particles in a region of approximately 250 $\mu m^2$; and optionally, 250 $\mu m^2$ may have a tolerance of $\pm 5$ $\mu m^2$ during measurement. The region is selected from a cross-sectional end face of the electrode plate, and methods for preparing the positive electrode active material into an electrode plate are well known in the art.

The primary particles having a primary particle size greater than 1500 nm are prone to particle fracture or pulverization during cycling of the positive electrode active material, reducing the mechanical integrity of the positive electrode active material particles and thus leading to loss of the active material. Controlling the particle size distribution of the primary particles having a primary particle size greater than 1500 nm in the positive electrode active material powder within a suitable range helps to improve the chemical and mechanical stability and electrochemical performance of the positive electrode active material, thereby improving the cycling stability of the positive electrode active material. Oversized primary particles may fracture during cycling, causing the fractured particles to lose electrical contact, which is a significant cause of capacity degradation during battery use. The fresh interfaces generated by fracturing accelerate metal ion dissolution, leading to cycle life degradation.

In some embodiments, primary particles having a primary particle size greater than 100 nm and less than or equal to 1500 nm have a particle size distribution index less than or equal to 0.45 in a region of $(250\pm5)$ $\mu m^2$ in a cross section obtained by cutting an electrode plate prepared from the positive electrode active material, optionally less than or equal to 0.36, where the particle size distribution index is a ratio of a standard deviation of the primary particle size of the primary particles to an average primary particle size.

The primary particles having a primary particle size greater than 100 nm and less than or equal to 1500 nm exhibit excellent particle size consistency, so that the particles tend to have consistent discharge behavior during battery cycling, reducing the likelihood of overcharge or over-discharge phenomena of the particles during charge-discharge processes. This is conducive to maintaining the structural stability of the positive electrode active material and improving the room-temperature cycling performance and high-temperature cycling performance of the battery.

In some embodiments, the positive electrode active material includes secondary particles, and a particle size distribution of the secondary particles satisfies: $(D_v90-D_v10)/D_v50\leq3$.

In the positive electrode active material, controlling the particle size distribution of the secondary particles within a suitable range helps to improve the particle size uniformity of the positive electrode active material.

In some embodiments, $D_v50$ of the secondary particles is 0.45-1.5 $\mu m$, optionally 0.6-1.5 $\mu m$.

In the positive electrode active material, the particle size of the secondary particles is within a suitable range, so that during charge-discharge processes, the secondary particles undergo no structural damage or reduced structural damage caused by excessive lithium intercalation and deintercalation, or the degree of polarization of the secondary particles during charge-discharge processes is reduced, which helps to achieve a more uniform current density on the surface of the secondary particles, thereby enabling the capacity of the positive electrode active material to be more fully utilized.

In some embodiments, in the general formula of the positive electrode active material provided by this application, $0.6<x\leq1$, $0\leq y<0.1$, and $1\leq z\leq1.1$, optionally $0.8\leq x\leq1$, $0.004\leq y\leq0.008$, and $1\leq z\leq1.08$.

In some embodiments, in the positive electrode active material provided by this application, a mass content of the M element in the positive electrode active material is 1000 ppm-6000 ppm, optionally 1500 ppm-5000 ppm.

Controlling the mass content of the M element in the positive electrode active material within a suitable range helps to improve the structural stability of the positive electrode active material.

According to a second aspect, this application provides a preparation method of a positive electrode plate, where the preparation method specifically includes:

compacting and granulating: compacting and granulating raw materials including a lithium source, an iron source, a manganese source, a phosphorus source, a carbon source, an M source, and a forming aid to obtain compacted granules;

sintering: loading the compacted granules and sintering the compacted granules to obtain secondary particles;

pulverizing: pulverizing the secondary particles to obtain a positive electrode active material; and

coating: applying a positive electrode slurry containing the positive electrode active material onto at least one side of a current collector to form a positive electrode plate,

where the positive electrode active material includes a substrate and a carbon coating layer disposed on a surface of the substrate, and the substrate has a general formula $Li_zFe_xMn_{(1-x-y)}M_yPO_4$, where $0.5\leq x\leq1$, $0\leq y\leq0.1$, $1\leq z\leq1.1$, and M is at least one selected from Ti, V, and Mg;

at least a portion of the positive electrode active material includes primary particles, and a particle size distribution of primary particles having a primary particle size greater than 80 nm and less than or equal to 180 nm in the positive electrode active material is less than or equal to 10%; and

there are no more than 15 primary particles having a primary particle size greater than 1500 nm in a region of $(250\pm5)$ $\mu m^2$ in a cross section obtained by cutting the positive electrode plate.

Controlling the particle size distribution of the primary particles having a primary particle size greater than 80 nm and less than or equal to 180 nm in the positive electrode active material powder within the range helps to reduce or mitigate the cycle life degradation of a small-particle positive electrode active material in the positive electrode active material, thereby prolonging the cycle life of the positive electrode active material.

In some embodiments, the particle size distribution of the primary particles having a primary particle size greater than 80 nm and less than or equal to 180 nm in the positive electrode active material is less than or equal to 8.5%, optionally 8%, 6%, 5%, 4%, or below 2%. A smaller particle size distribution of the primary particles having a primary particle size greater than 80 nm and less than or equal to 180 nm in the positive electrode active material is more conducive to prolonging the cycle life of the positive electrode active material and maintaining the stability of the cycle life of the positive electrode active material.

In some embodiments, in the positive electrode active material of the positive electrode plate prepared by the method, there are no more than 15 primary particles having a primary particle size greater than 1500 nm in a region of $(250\pm5)$ $\mu m^2$ in a cross section obtained by cutting the electrode plate, optionally no more than 12, 8, or 6 particles in a region of approximately 250 $\mu m^2$.

Controlling the particle size distribution of the primary particles having a primary particle size greater than 1500 nm in the positive electrode active material powder within the range helps to improve the chemical and mechanical stability and electrochemical performance of the positive electrode active material, thereby improving the cycling stability of the positive electrode active material.

In some embodiments, an average particle size of the compacted granules in the compacting and granulating step is 3 mm-30 mm.

The compacted granules being within a suitable range helps to improve the uniformity of different raw materials within the granules, and pores between the granules facilitate the expulsion of reducing gases generated from the decomposition of the carbon source during preparation, improving the uniformity of carbon at different positions in a sintering apparatus (for example, a sagger), and preventing significant flow of a carbon source precursor at high temperatures that may lead to stratification in height after compaction.

In some embodiments, a compacted density of the compacted granules is 1.0 g/cm$^3$ or higher, optionally 1.2-3.0 g/cm$^3$.

Controlling the compacted density of the compacted granules within a suitable range helps to increase a loading capacity of the sagger during preparation, thereby improving sintering productivity.

In some embodiments, the preparation method includes: loading the compacted granules to a loading height of 5 cm-30 cm and sintering the compacted granules to obtain secondary particles; and

optionally, the loading height is 8 cm-20 cm.

Controlling the loading height of the compacted granules during sintering within a suitable range helps to promptly expel reducing gases generated from the decomposition of the carbon source during sintering, facilitating heat transfer and avoiding uneven decomposition of the carbon source in the compacted granules at different positions in the sintering apparatus, thereby improving the consistency of granule growth and also ensuring productivity.

In some embodiments, the preparation method includes: pulverizing the secondary particles to achieve $D_v50$ of 0.45 $\mu m$-1.5 $\mu m$, optionally 0.6 $\mu m$-1.5 $\mu m$. The secondary particles are pulverized to a particle size within the range, so that during charge-discharge processes, the secondary particles undergo no structural damage or reduced structural damage caused by excessive lithium intercalation and deintercalation, or the degree of polarization of the secondary particles during charge-discharge processes is reduced, helping to more fully utilize the capacity of the positive electrode active material.

In some embodiments, the preparation method includes: pulverizing the secondary particles to achieve a particle size distribution satisfying: $(D_v90-D_v10)/D_v50\leq3$; and optionally, pulverizing the secondary particles to achieve a particle size distribution satisfying: $1\leq(D_v90-D_v10)/D_v50\leq3$. Pulverizing the secondary particles to achieve a particle size distribution within the ranges helps to improve the particle size uniformity of the positive electrode active material and cycling stability of the positive electrode active material.

In some embodiments, the compacting and granulating step specifically includes:

grinding raw materials including a lithium source, an iron source, a manganese source, a phosphorus source, a carbon source, an M source, a forming aid, and a solvent to obtain a slurry; drying the slurry; and then compacting and granulating the slurry to obtain compacted granules.

The raw materials are ground first, so that the particle size of oversized primary particles decreases, and the content of the oversized primary particles in the raw materials decreases, which helps to reduce the particle size distribution of the oversized primary particles in the prepared positive electrode active material. The particle sizes of different raw materials are reduced, facilitating the acquisition of nanoscale primary particles with a more uniform particle size. Additionally, the mixing uniformity of different raw materials is improved, helping to improve the uniformity of different components in the prepared positive electrode active material. Moreover, the drying process allows for suitable pores between raw material particles, facilitating the expulsion of reducing gases generated from the decomposition of the carbon source during sintering.

In some embodiments, a sintering temperature in the sintering step is 600°C-800°C; and/or, a constant-temperature sintering time in the sintering step is 2 h-12 h.

Controlling the sintering temperature and/or sintering time within a suitable range ensures sufficient sintering of the compacted granules, allowing the positive electrode active material to have excellent structural parameters.

In some embodiments, the compacting and granulating step specifically includes:

(1-1) uniformly mixing initial reactants including a lithium source, an iron source, a manganese source, a phosphorus source, a carbon source, and an M source, followed by pre-sintering to obtain an initial product;
(1-2) mixing and grinding intermediate reactants including the initial product, a carbon source, and a forming aid to obtain an intermediate product; and
(2) compacting and granulating the intermediate product to obtain compacted granules,
where a mass content of the carbon source in step (1-1) is 2%-5%, based on a total mass of the initial reactants.

A small amount of carbon source during pre-sintering can achieve a reduction function, enabling thorough mixing and reaction of the initial reactants, thereby improving the uniformity and completeness of the reaction, and achieving an initial product with excellent particle size uniformity. Pre-sintering allows ultrafine particles in the initial reactants to undergo pre-reaction, reducing the content of small particles in the raw materials and improving the particle size uniformity of the material. Additionally, further grinding of the intermediate reactants including the initial product, carbon source, and forming aid refines large particles, thereby reducing the content of oversized primary particles in the raw materials, further improving the particle size uniformity of the material, and providing a material foundation for the subsequent preparation of a positive electrode active material with excellent particle size uniformity.

In summary, pre-sintering can improve the particle size uniformity of the initial reactants, allowing the compacted and granulated intermediate product to have excellent particle size uniformity, thereby helping to improve the uniformity of different components in the prepared positive electrode active material.

In some embodiments, $D_V50$ of the intermediate product is 0.45 $\mu$m-1.25 $\mu$m, and $D_V10$ of the intermediate product is greater than or equal to 0.15 $\mu$m.

Controlling the $D_V50$ and $D_V10$ of the intermediate product within suitable ranges is conducive to controlling the mass content of small particles in the positive electrode active material, improving the structural stability of the positive electrode active material, and improving the cycling performance of the battery.

According to a third aspect, this application provides a secondary battery including a negative electrode plate and the positive electrode plate provided by the first aspect of this application or a positive electrode plate prepared by the preparation method provided by the second aspect.

According to a fourth aspect, this application provides an electric apparatus including the secondary battery provided by the third aspect of this application.

The above description is only an overview of the technical solutions of this application. To facilitate a clearer understanding of the technical means of this application, implementation can be performed according to the content of the specification, and to make the above and other objectives, features, and advantages of this application more apparent and easier to understand, specific embodiments of this application are provided below.

## BRIEF DESCRIPTION OF DRAWINGS

In the drawings, unless otherwise specified, identical reference numerals throughout multiple drawings denote identical or similar components or elements. These drawings are not necessarily drawn to scale. It should be understood that these drawings illustrate only some embodiments disclosed in this application and should not be construed as limiting the scope of this application.

FIG. 1 is a schematic diagram of sintering of compacted granules in a sintering apparatus in this application;
FIG. 2 is a scanning electron microscope (SEM) photograph of a positive electrode active material in Example 1 of this application;
FIG. 3 is a scanning electron microscope photograph of a cross section obtained by cutting a positive electrode plate prepared from the positive electrode active material in Example 1 of this application by using argon ion beams, where an electron microscope scale in FIG. 3A is 2 $\mu$m, and an electron microscope scale in FIG. 3B is 500 nm;
FIG. 4 is a scanning electron microscope photograph of a cross section obtained by cutting a positive electrode plate prepared from a positive electrode active material in Comparative Example 1 of this application by using argon ion beam, where an electron microscope scale in FIG. 4A is 1 μm, and an electron microscope scale in FIG. 4B is 200 nm;

FIG. 5 is a cycling performance test curve of a secondary battery in Example 1 and Comparative Example 1 of this application at 25°C and 60°C;

FIG. 6 is a schematic diagram of a secondary battery cell according to an embodiment of this application;

FIG. 7 is an exploded view of the secondary battery cell according to the embodiment of this application shown in FIG. 6;

FIG. 8 is a schematic diagram of a battery module according to an embodiment of this application;

FIG. 9 is a schematic diagram of a battery pack according to an embodiment of this application;

FIG. 10 is an exploded view of the battery pack according to the embodiment of this application shown in FIG. 9;

FIG. 11 is a schematic diagram of an electric apparatus using a secondary battery as a power source according to an embodiment of this application;

FIG. 12 is a SEM photograph of a cross section of an electrode plate in a secondary battery according to an embodiment of this application; and

FIG. 13 is a scanning electron microscope photograph of a cross section obtained by cutting a positive electrode plate in Example 15 of this application by using argon ion beam.

Description of reference signs:

1. battery pack; 2. upper box body; 3. lower box body; 4. battery module; 5. secondary battery; 51. shell; 52. electrode assembly; 53. cover plate; 6. compacted granule; and 7. sagger.

## DESCRIPTION OF EMBODIMENTS

The embodiments of the technical solutions of this application are described in detail below with reference to the accompanying drawings. The following embodiments are only used to illustrate the technical solutions of this application more clearly and are merely examples, which are not intended to limit the protection scope of this application.

Unless otherwise defined, all technical and scientific terms used herein have the same meanings as commonly understood by those skilled in the technical field of this application; the terms used herein are for the purpose of describing specific embodiments only and are not intended to limit this application; and the terms "include", "comprise", and any variations thereof in the specification, claims, and the above description of the accompanying drawings of this application are intended to cover non-exclusive inclusion.

Reference to "embodiment" herein means that a particular feature, structure, or characteristic described in connection with the embodiment may be included in at least one embodiment of this application. The appearance of the phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the descriptions of the embodiments of this application, the term "and/or" indicates an associative relationship describing associated objects, representing that three possible relationships may exist. For example, A and/or B may indicate: only A exists, both A and B exist, or only B exists. Additionally, the character "/" herein generally indicates an "or" relationship between the contextually associated objects.

The "range" disclosed in this application is defined in the form of a lower limit and an upper limit, where a given range is defined by selecting a lower limit and an upper limit, and the selected lower limit and upper limit define the boundaries of the specific range. A range defined in this manner may include endpoints or exclude endpoints, and the endpoints may be arbitrarily combined, meaning any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges can all be contemplated: 1-3, 1-4, 1-5, 2-3, 2-4, and 2-5. In this application, unless otherwise specified, the numerical range "a-b" represents an abbreviated representation of any real number combination between a and b, where a and b are both real numbers. For example, the numerical range "0-5" means all real numbers between "0-5" are listed herein, and "0-5" is merely an abbreviated representation of these numerical combinations. Additionally, a parameter expressed as an integer greater than or equal to 2 is equivalent to disclosing that the parameter is, for example, an integer among 2, 3, 4, 5, 6, 7, 8, 9, 10, 11, 12, and the like.

Unless otherwise specified, all steps of this application may be performed sequentially or randomly, preferably sequentially. For example, the method including steps (a) and (b) indicates that the method may include steps (a) and (b) performed sequentially, or steps (b) and (a) performed sequentially. For example, mentioning that the method may further include step (c) indicates that step (c) may be added to the method in any order, for example, the method may include steps (a), (b), and (c), or steps (a), (c), and (b), or steps (c), (a), and (b), or the like.

Unless otherwise specified, the terms "include" and "comprise" mentioned in this application indicate an open-ended or closed-ended inclusion. For example, "include" and "comprise" may indicate that other components not listed may also be included or comprised, or only the listed components may be included or comprised.

**Positive electrode active material**

Multiple factors can affect the cycling performance of a positive electrode active material, such as residual alkali content on the surface of the material, crystal structure integrity of the material, fine powder content in the material, and content of water adsorbed on the surface of the material. The fine powder content, that is, a proportion of small particles in all particles, is a critical factor limiting further improvement in cycling performance of the battery. This is because, in a synthesis reaction of the positive electrode active material, lithium ions have a lower intercalation energy barrier in particles with a small particle size, and have higher reactivity, causing excessive lithium intercalation in the fine powder, resulting in an excessive Li in fine powder particles but insufficient Li in particles having a larger particle size than the fine powder, which is uneven lithium distribution. During charging, due to polarization, small particles are always structurally damaged due to excessive lithium deintercalation, and side reactions between small particles and the electrolyte in a charging state are more severe and are more apparent at high temperatures, leading to rapid cycle life degradation of the small particles. Therefore, controlling the content of the fine powder in the positive electrode active material helps to improve the cycling performance of energy storage apparatuses (for example, secondary batteries).

This application provides a carbon-coated (@C) phosphate-based positive electrode active material including at least one compound represented by the general formula $Li_zFe_xMn_{(1-x-y)}M_yPO_4@C$, where $0.5 \leq x \leq 1$, $0 \leq y \leq 0.1$, $1 \leq z \leq 1.1$, and M is at least one selected from Ti, V, and Mg. At least a portion of the positive electrode active material includes primary particles, and a particle size distribution of primary particles having a primary particle size greater than 80 nm and less than or equal to 180 nm in the positive electrode active material is less than or equal to 10%.

In this application, the term "positive electrode active material" may be represented by "$Li_zFe_xMn_{(1-x-y)}M_yPO_4@C$".

In this application, the term "positive electrode active material including at least one compound represented by the general formula $Li_zFe_xMn_{(1-x-y)}M_yPO_4@C$" is equivalent to the term "positive electrode active material including a substrate and a carbon coating layer disposed on a surface of the substrate, where the substrate has a general formula $Li_zFe_xMn_{(1-x-y)}M_yPO_4$".

In some embodiments, the particle size distribution of the primary particles having a primary particle size greater than 80 nm and less than or equal to 180 nm in the positive electrode active material is less than or equal to 9.5%, 9%, 8.5%, 8%, 7%, 6%, 5%, 4%, 3%, 2%, or 1%, or the particle size distribution of the primary particles having a primary particle size greater than 80 nm and less than or equal to 180 nm in the positive electrode active material is selected from 0.1%-10%, 0.5%-10%, 1%-10%, 0.1%-8%, 0.1%-6%, 0.1%-4%, 0.1%-3%, 0.1%-2%, 0.1%-1%, 0.3%-5%, 0.8%-3%, or 0.1%-1.5%.

The term "primary particles" are also referred to as single-crystal particles. Typically, individual fine crystal grains are referred to as primary particles. In some cases, even for amorphous particles, when original particles and agglomerated particles are present, the original particles may also be referred to as primary particles.

Multiple original particles agglomerate to form agglomerated particles, which are referred to as "secondary particles". The acting force causing agglomeration between particles may be physical bonding (for example, van der Waals force) or a chemical bond (for example, bridging oxygen bond). Agglomeration of particles may be achieved through external pressure or may be assisted by an additional substance (for example, an adhesive chemical substance). A particle size of secondary particles is referred to as "secondary particle size".

In this application, the term "primary particle size" refers to a particle size of the primary particles.

In this application, the terms "fine powder", "small particles", and "fine powder particles" have the same meaning, which all refer to particles with a particle size greater than 80 nm and less than or equal to 180 nm, where the particles include primary particles and secondary particles.

The term "particle size distribution" refers to a percentage of the number of particles with a certain particle size or within a certain particle size range relative to a total number of powder particles.

Particle size distribution may be determined using test methods commonly used in the art. For example, a laser particle size analyzer is used to determine the particle size distribution of powder particles.

Particle size distribution may alternatively be determined using a long-diameter statistical method. The long-diameter statistical method can be used to determine a particle size of an active material in an electrode plate film. In some embodiments, the electrode plate can be cut using an argon ion beam perpendicular to a plane of the electrode plate (for example, a plane with a relatively large area), the exposed cross section is photographed using a scanning electron microscope, and a diameter of an equivalent circle is calculated based on a cross-sectional area of each particle. Particles below 80 nm are difficult to distinguish individually when photographed with a scanning electron microscope. In this case, particles below 80 nm may not be counted when the particle size distribution is determined using an equivalent circle diameter statistical method.

In the positive electrode active material provided by this application, controlling the particle size distribution of the primary particles having a primary particle size greater than 80 nm and less than or equal to 180 nm to below 10% in the positive electrode active material powder helps to reduce the number of fine powder structurally damaged due to excessive lithium deintercalation during charging, reduce side reactions between the fine powder and the electrolyte, and slow down the cycle life degradation of the positive electrode active material, thereby prolonging the cycle life of the positive electrode active material.

As mentioned above, high reactivity of the fine powder in reaction leads to uneven lithium distribution in the positive electrode active material, which also affects a surface state of the positive electrode active material. When the content of the powder is too high, excessive lithium content increases the alkalinity of the positive electrode active material and increases side reactions with the binder, deteriorating the processing performance of the slurry, leading to rapid viscosity increase, and even causing gelation in severe cases. Controlling the particle size distribution of the fine powder within a suitable range also helps to improve the processing performance of the positive electrode active material.

In some embodiments, the particle size distribution of the primary particles having a primary particle size greater than 80 nm and less than or equal to 180 nm in the positive electrode active material is less than or equal to 8.5%, optionally less than or equal to 8%, 6%, 5%, or 2%.

Controlling the particle size distribution of the primary particles having a primary particle size greater than 80 nm and less than or equal to 180 nm below 8.5% in the positive electrode active material powder can further reduce the likelihood of side reactions between fine powder and the electrolyte, increasing the room-temperature cycling capacity retention rate and high-temperature cycling capacity retention rate of the battery.

In some embodiments, in the positive electrode active material, there are no more than 15 primary particles having a primary particle size greater than 1500 nm in a region of approximately 250 $\mu m^2$, optionally no more than 12, 10, 9, 8, 7, 6, 5, 4, 3, or 2 particles in a region of approximately 250 $\mu m^2$. The term "approximately" indicates a measurement error or a fluctuation degree during measurement, optionally a tolerance of $\pm 5$ $\mu m^2$. The "region" refers to a region in a cross section obtained by cutting an electrode plate prepared from the positive electrode active material, the region is used to measure the number of large particles, and methods for preparing the positive electrode active material into an electrode plate are well known in the art.

In some embodiments, the positive electrode active material may be prepared into an electrode plate according to the method disclosed in Example 1. In some embodiments, the electrode plate may be prepared by mixing positive electrode material powder and a polyvinylidene fluoride (PVDF) binder at a mass ratio of 95:5, with use of N-methylpyrrolidone as a solvent, and the electrode plate is cold-pressed to achieve a compacted density of 2.2 g/cm$^3$.

In some embodiments, in the positive active material, there are no more than 0-2, 0-3, 1-2, 1-3, 2-3, 0-4, 2-4, 3-4, 0-5, 2-5, 0-6, 5-6, 6-8, or 8-14 primary particles having a primary particle size greater than 1500 nm in a region of approximately 250 $\mu m^2$.

In some embodiments, in the positive active material, there are no more than 0-2, 0-3, 1-2, 1-3, 2-3, 0-4, 2-4, 3-4, 0-5, 2-5, 0-6, 5-6, 6-8, or 8-12 primary particles having a primary particle size greater than 1500 nm in a region of approximately 250 $\mu m^2$.

The number of the primary particles having a primary particle size greater than 1500 nm may be counted using a scanning electron microscope (SEM). For example, the electrode plate is cut using an argon ion beam perpendicular to a large surface of the electrode plate, an end face is exposed, the end face is photographed with a SEM, and the particle sizes of the particles are counted using an equivalent circle area statistical method. The number of large particles may be determined by a single measurement or by averaging multiple measurement values.

The primary particles having a primary particle size greater than 1500 nm are also referred to as "large particles", "oversized single-crystal particles", or "oversized primary particles". During cycling, the positive electrode material undergoes repeated expansion and contraction deformation processes. Oversized primary particles have intergranular cracks due to deformation during cycling, leading to severe pulverization of the oversized primary particles, thereby significantly reducing the mechanical integrity of the primary particles and secondary particles, exacerbating electrolyte infiltration, and causing significant loss of a positive electrode active material (for example, lithium ions). Additionally, the presence of intergranular cracks also causes electrical contact failure, exacerbating capacity polarization loss. Consequently, continuous generation of new electrode/electrolyte interfaces leads to a sharp deterioration in chemical and mechanical properties of the positive electrode active material during long-term cycling.

Controlling the particle size distribution of the primary particles having a primary particle size greater than 1500 nm in the positive electrode active material powder within a suitable range can effectively prevent particle fracture, mitigate surface decomposition, and suppress intergranular crack issues, thereby improving the chemical and mechanical stability and improving the electrochemical performance. Interface degradation and overall mechanical disintegration effects are suppressed, and the chemical and mechanical stability is improved, enabling improved cycling stability of the positive electrode active material.

In some embodiments, the primary particles having a primary particle size greater than 100 nm and less than or equal to 1500 nm have a particle size distribution index less than or equal to 0.45 in a region of (250$\pm$5) $\mu m^2$ in a cross

section obtained by cutting the electrode plate prepared from the positive electrode active material, where the particle size distribution index is a ratio of a standard deviation of the primary particle size of the primary particles to an average primary particle size.

In some embodiments, the primary particles having a primary particle size greater than 100 nm and less than or equal to 1500 nm have a particle size distribution index which is optionally less than or equal to 0.45, less than or equal to 0.40, less than or equal to 0.35, less than or equal to 0.3, less than or equal to 0.25, or less than or equal to 0.20 in a region of $(250\pm5)$ $\mu m^2$ in a cross section obtained by cutting the electrode plate prepared from the positive electrode active material.

In some embodiments, the primary particles having a primary particle size greater than 100 nm and less than or equal to 1500 nm have a particle size distribution index less than or equal to 0.36 in a region of $(250\pm5)$ $\mu m^2$ in a cross section obtained by cutting the electrode plate prepared from the positive electrode active material, where the particle size distribution index is a ratio of a standard deviation of the primary particle size of the primary particles to an average primary particle size.

In some embodiments, the primary particles having a primary particle size greater than 100 nm and less than or equal to 1500 nm have a particle size distribution index which is at least one of less than or equal to 0.36, less than or equal to 0.3, less than or equal to 0.25, or less than or equal to 0.20 in a region of $(250\pm5)$ $\mu m^2$ in a cross section obtained by cutting the electrode plate prepared from the positive electrode active material.

The particle size distribution index has a well-known meaning in the art and may be measured using testing methods and testing instruments well known in the art. The particle size distribution index is an important parameter for evaluating the particle size uniformity. A lower particle size distribution index indicates a smaller particle size deviation and a higher degree of particle size uniformity. An exemplary testing method includes: cutting the electrode plate using an argon ion beam perpendicular to a large surface of the electrode plate, exposing a cross section, photographing the cross section with a scanning electron microscope, and statistically analyzing the particle size of the positive electrode active material using an equivalent circle area statistical method,

where the particle size distribution index PDI is a quotient of a standard deviation of a particle size $\sigma$ divided by an average particle size $\bar{x}$;

$$PDI = \sigma/\bar{x}$$

$$\sigma = \sqrt{\frac{\sum_{i=1}^{n}(x_i - \bar{x})^2}{n}}$$

where $\sigma$ is the standard deviation of particle size, $x_i$ is the particle size value, $\bar{x}$ is the average particle size, n is a total number of the particles counted, and the average particle size is a quotient of a total particle size value divided by the total number of the particles counted,

the average particle size $\bar{x}$ is a quotient of the total particle size value of the primary particles having a primary particle size greater than 100 nm and less than or equal to 1500 nm divided by the number of the primary particles having a primary particle size greater than 100 nm and less than or equal to 1500 nm,

the particle size value $x_i$ is the particle size value of the primary particles having a primary particle size greater than 100 nm and less than or equal to 1500 nm, and

the total number n of the particles counted is the number of primary particles having a primary particle size greater than 100 nm and less than or equal to 1500 nm in a region of $(250\pm5)$ $\mu m^2$ in a cross section obtained by cutting the positive electrode plate.

The primary particles having a primary particle size greater than 100 nm and less than or equal to 1500 nm exhibit excellent particle size consistency, so that the particles tend to have consistent discharge behavior during battery cycling, reducing the likelihood of overcharge or over-discharge phenomena of the particles during charge-discharge processes. This is conducive to maintaining the structural stability of the positive electrode active material and improving the room-temperature cycling performance and high-temperature cycling performance of the battery.

In some embodiments, the positive electrode active material includes secondary particles, and a particle size distribution of the secondary particles satisfies: $(D_v90-D_v10)/D_v50 \leq 3$, optionally less than or equal to 2.9, 2.8, 2.6, 2.5, 2.4, 2.3, 2.2, 1.4, 1.5, or 1.2. Optionally, $1 \leq (D_v90-D_v10)/D_v50 \leq 3$.

In the positive electrode active material, the particle size distribution of the secondary particles being within a suitable range helps to improve the particle size uniformity of the positive electrode active material, thereby further improving the cycling performance.

In some embodiments, $D_v50$ of the secondary particles is 0.45-1.5 μm, optionally 0.5-1.5 μm, 0.8-1.5 μm, 0.7-1.5 μm, 1-1.5 μm, 0.45-1.3 μm, 0.45-1.0 μm, 0.5-1.0 μm, 0.6-1.5 μm, or 0.7-1.5 μm, or any value within these ranges.

In the positive electrode active material, the particle size of the secondary particles is within a suitable range, so that during charge-discharge processes, the secondary particles undergo no structural damage or reduced structural damage caused by excessive lithium intercalation and deintercalation. Additionally, this helps to reduce the degree of polarization of the secondary particles during charge-discharge processes, and helps to achieve a more uniform current density on the surface of the secondary particles, thereby fully utilizing the capacity of the positive electrode active material and improving the cycling performance.

In the positive electrode active material provided by this application, the particle size distribution concentration of the positive electrode active material is significantly improved while the particle size distribution of the fine powder and large particles is reduced.

In some embodiments, the positive electrode active material may be one or more of olivine-structured lithium iron phosphate, olivine-structured lithium iron manganese phosphate, or modified compounds thereof, which can improve the cycling performance and storage performance of the battery while as well as improving the rate performance of the battery. Batteries using these positive electrode active materials have a relatively low operating voltage, generally ≤ 4.35 V, thus further improving the cycling performance and storage performance of the batteries.

In some embodiments, in the positive electrode active material provided by this application, 0.6<x≤1, 0≤y<0.1, and 1≤z≤1.1, optionally 0.8≤x≤1, 0.004≤y≤0.008, and 1≤z≤1.08.

In some embodiments, in the positive electrode active material provided by this application, a mass content of the M element in the positive electrode active material is selected from 1000 ppm-6000 ppm, optionally 1000 ppm-5500 ppm, 1000 ppm-5000 ppm, 1500 ppm-6000 ppm, 1500 ppm-5000 ppm, 2000 ppm-6000 ppm, 2500 ppm-6000 ppm, or 2000 ppm-5500 ppm, or any value within these ranges.

In some embodiments, the M element includes Ti. In some embodiments, the M element includes V. In some embodiments, the M element includes Mg.

The main body of an anion portion of the positive electrode active material is a phosphate matrix, and a metal matrix is primarily formed by iron, manganese, or a combination thereof. By introducing divalent or multivalent M cations, lithium ions intercalate and deintercalate in an olivine-structured matrix formed by M-containing cations and phosphate-containing anions, which helps to improve the structural stability of the positive electrode active material.

## Preparation method of positive electrode active material

This application provides a preparation method of a carbon-coated (@C) phosphate-based positive electrode active material, and the positive electrode active material includes at least one compound represented by the general formula $Li_zFe_xMn_{(1-x-y)}M_yPO_4@C$, where 0.5≤x≤1, 0≤y≤0.1, 1≤z≤1.1, and M is at least one selected from Ti, V, and Mg.

In the positive electrode active material of some embodiments, 0.6<x≤1 and 0≤y<0.1; and optionally 0.8≤x≤1, 0.004≤y≤0.008, and 1≤z≤1.08. In some embodiments, the M element is selected from Ti. In some embodiments, the M element is selected from V. In some embodiments, the M element is selected from Mg.

In the positive electrode active material of some embodiments, a mass content of the M element in the positive electrode active material is 1000 ppm-6000 ppm, optionally 1000 ppm-5500 ppm, 1000 ppm-5000 ppm, 1500 ppm-6000 ppm, 1500 ppm-5000 ppm, 2000 ppm-6000 ppm, 2500 ppm-6000 ppm, or 2000 ppm-5500 ppm, or any value within these ranges.

The main body of an anion portion of the positive electrode active material is a phosphate matrix, and a metal matrix is primarily formed by iron, manganese, or a combination thereof. By introducing divalent or multivalent M cations, lithium ions intercalate and deintercalate in an olivine-structured matrix formed by M-containing cations and phosphate-containing anions, which helps to improve the structural stability of the positive electrode active material.

In some embodiments, the positive electrode active material may be one or more of olivine-structured lithium iron phosphate, olivine-structured lithium iron manganese phosphate, or modified compounds thereof, which can improve the cycling performance and storage performance of the battery as well as improving the rate performance of the battery. Batteries using these positive electrode active materials have a relatively low operating voltage, generally ≤ 4.35 V, thus further improving the cycling performance and storage performance of the batteries.

The preparation method provided by this application includes the following steps:
uniformly mixing raw materials including a lithium source, an iron source, a manganese source, a phosphorus source, a carbon source, an M source, and a forming aid, followed by compacting and granulating to obtain compacted granules.

Generally, the compacted granules are an actual particle group formed by particles with varying sizes and shapes. As compared to an imaginary particle group formed by uniform spherical particles with the same total particle size range, a diameter of these spherical particles is an average particle size of the actual particle group (compacted granules). For spherical particles, the spherical diameter is undoubtedly the particle size of the particles, but in reality, no truly spherical particles exist, and the shape of actual particles is highly complex. For convenience, in this application, an equivalent particle size is used to describe the granularity (particle size) or average particle size of irregular particles. It can be understood that when physical properties or physical behaviors of one particle are most similar to those of a homogeneous sphere with a certain diameter, a diameter (or combination) of this sphere is taken as an equivalent particle size of the measured particle.

The average particle size can be measured using particle size measurement methods or instruments commonly used in the art, including but not limited to laser particle size analyzers and ultrasonic particle size analyzers. The average particle size may be linear average diameter, area average diameter, volume average diameter, weight average diameter, or specific surface average diameter. In this application, the average particle size refers to volume average diameter. When an equivalent particle size is used to describe granularity, the average particle size in this application may also be volume equivalent diameter.

In some embodiments, the lithium source includes at least one of lithium carbonate, lithium hydroxide, lithium phosphate, lithium dihydrogen phosphate, lithium oxide, lithium chloride, lithium nitrate, or lithium sulfate; and optionally, the lithium source includes lithium carbonate.

In some embodiments, the iron source includes at least one of iron phosphate, ferrous hydroxide, ferrous nitrate, ferrous phosphate, ferrous pyrophosphate, ferrous carbonate, ferrous chloride, ferrous oxalate, ferric chloride, ferric hydroxide, ferric nitrate, ferric citrate, or ferric oxide; and optionally, the iron source includes ferric oxide.

In some embodiments, the manganese source includes at least one of manganese dioxide, manganese trioxide, trimanganese tetroxide, manganese oxalate, manganese acetate, or manganese nitrate.

In some embodiments, the phosphorus source includes at least one of phosphoric acid, diammonium hydrogen phosphate, ammonium dihydrogen phosphate, iron phosphate, lithium dihydrogen phosphate, or lithium phosphate; and optionally, the phosphorus source includes ammonium dihydrogen phosphate.

In some embodiments, the carbon source includes at least one of sucrose, glucose, citric acid, fructose, lactose, porous graphene, activated carbon, activated carbon fiber, mesoporous carbon, carbon nanotubes, carbon molecular sieves, asphalt, and polyethylene glycol; and optionally, the carbon source includes sucrose.

In some embodiments, the M source is at least one selected from oxides, hydroxides, oxalates, acetates, chlorides, nitrates, or phosphates of Ti, V, and Mg elements; and optionally, the M source includes one or more of titanium dioxide, magnesium hydroxide, and vanadium pentoxide.

The forming aid is selected from polymer substances that can be dissolved or dispersed in water or alcohol. In some embodiments, the forming aid includes at least one of polyacrylate, starch, phenolic resin, polyurethane, melamine resin, polyethylene, stearic acid, PVC, polyacrylonitrile, natural rubber, styrene-butadiene rubber, or butadiene rubber; and optionally, the forming aid includes starch.

The forming aid can further improve the degree of integrity of the compacted granules during sintering, improve the mechanical stability of the compacted granules during sintering, and prevent structural collapse of the granules during sintering.

In some embodiments, raw materials including a lithium source, an iron source, a manganese source, a phosphorus source, a carbon source, an M source, and a forming aid are ground. Optionally, the raw materials are ground to achieve $D_v50$ of 0.3-1.5 $\mu$m, 0.3-1.0 $\mu$m, 0.3-0.8 $\mu$m, 0.35-0.6 $\mu$m, or 0.35-0.9 $\mu$m. A grinding device, such as a ball mill, a sand mill, or a mechanical mill, may be used to grind the raw materials.

In some embodiments, water, an alcohol solvent, or a uniform stable mixed solution of both may be added and mixed uniformly with the raw materials, and then the resulting mixture is ground. The alcohol solvent includes, but is not limited to, methanol, ethanol, and ethylene glycol, and may be a mixture of one or more different alcohol solvents for use.

In some embodiments, the forming aid in the raw materials may be dissolved or dispersed in water, an alcohol solvent, or a uniform stable mixed solution of both, and mixed with other components of the raw materials as the solvent or solution is added.

After grinding, a particle size of the present oversized primary particles decreases, and the content of the oversized primary particles in the raw materials decreases, which helps to reduce the particle size distribution of the oversized primary particles in the prepared positive electrode active material. The particle sizes of different raw materials are reduced, facilitating the acquisition of nanoscale primary particles with a more uniform particle size. Additionally, the mixing uniformity of different raw materials is improved, helping to improve the uniformity of different components in the prepared positive electrode active material.

In some embodiments, the ground raw materials are dried; and optionally, the ground raw materials are spray-dried. In some embodiments, the microspheres formed by spray drying have a particle size $D_v50$ of 5-50 $\mu$m, optionally 5-40 $\mu$m, 8-30 $\mu$m, 10-25 $\mu$m, or 10-20 $\mu$m.

The spray-dried raw materials are in a near-spherical form with good flowability, and suitable pores are present between raw material particles, facilitating the expulsion of reducing gases generated from the decomposition of the carbon source during sintering.

In some embodiments, the spray-dried raw materials are compacted and granulated.

In some embodiments, the raw materials including a lithium source, an iron source, a manganese source, a phosphorus source, a carbon source, an M source, and a forming aid are compacted and granulated to obtain compacted granules with an average particle size of 3 mm-30 mm, optionally 5 mm-25 mm, 5 mm-20 mm, 5 mm-15 mm, 10 mm-15 mm, 10 mm-20 mm, or 10 mm-25 mm. The average particle size may alternatively be selected from any value among 7.5 mm, 12.5 mm, 17.5 mm, 22.5 mm, and 27.5 mm, or a range between any two of these values.

When the average particle size of the compacted granules is less than 3 mm, and fewer pores are formed by major bridges between the granules, resulting in insignificant gas expulsion improvement. When the average particle size of the compacted granules is greater than 30 mm, the uniformity of nanoparticles within a single compacted granule cannot be guaranteed, and the gas expulsion capability of a single compacted granule is significantly reduced. The compacted granules being within a suitable range helps to improve the uniformity of different raw materials within the granules, and the pores between the granules facilitate the expulsion of reducing gases generated from the decomposition of the carbon source during preparation.

In some embodiments, a compacted density of the compacted granules obtained by compacting and granulating is 1.0 g/cm$^3$ or higher, optionally 1.2-3.0 g/cm$^3$.

Controlling the compacted density of the compacted granules within a suitable range helps to increase the loading capacity of the sagger during preparation, thereby improving sintering productivity.

In some embodiments, the preparation method includes: loading the compacted granules to a loading height of 5 cm-30 cm and sintering the compacted granules to obtain secondary particles. Optionally, the loading height is 8 cm-30 cm, 8 cm-20 cm, 5 cm-25 cm, 5 cm-20 cm, 10 cm-30 cm, 10 cm-25 cm, or 10 cm-20 cm.

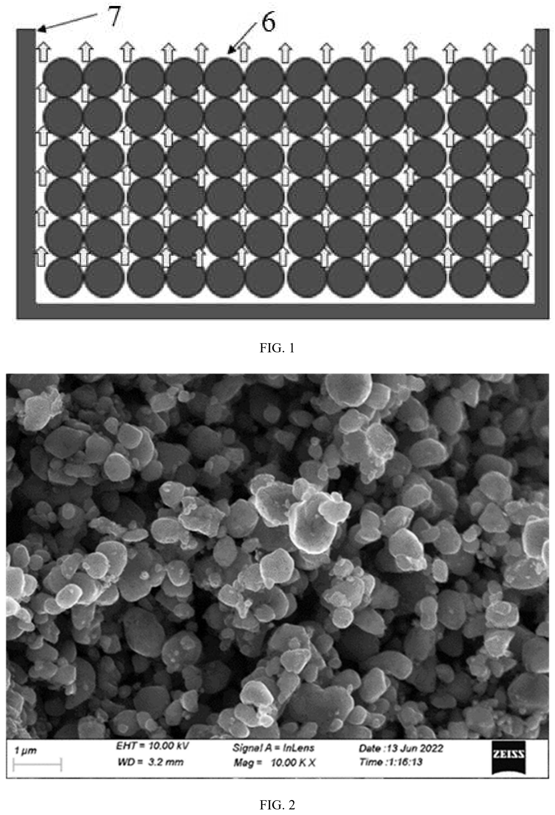

FIG. 1 illustrates a schematic diagram of sintering of compacted granules in a loading component such as a sagger of a sintering device. The sagger 7 is generally made of a graphite material, and the compacted granules 6 are loaded into the sagger. In this case, pores can be formed between the compacted granules 6. During sintering, reducing gases and other gaseous substances generated from the decomposition of the carbon source can be expelled through the pores in a direction indicated by an arrow in FIG. 1. The rising gas can transfer heat to the compacted granules 6 at the top layer of the sagger 7. When gas expulsion is not smooth, the temperature across the sagger 7 becomes uneven, and the content of reducing gases at the top layer of the sagger 7 may be high. Controlling the loading height of the compacted granules within a suitable range helps to promptly expel the reducing gases and other undesired gaseous substances during sintering, accelerating heat transfer and avoiding uneven decomposition of the carbon source in the compacted granules at different positions in the sintering apparatus, thereby improving the consistency of granule growth and also ensuring productivity.

In some embodiments, after the compacted granules are loaded, a porosity between the granules is 5%-20%; and optionally, the porosity is selected from 5%-15%, 10%-20%, 10%-15%, 8%-20%, 12%-20%, or 8%-17%.

In some embodiments, the compacted granules are sintered in an inert gas atmosphere, where the inert gas may include one or more of nitrogen, carbon dioxide, or helium; and optionally, the inert gas is selected from nitrogen.

In some embodiments, the compacted granules are sintered within a sintering temperature range of 600°C-800°C; and optionally, the sintering temperature is selected from 650°C-800°C, 680°C-800°C, 700°C-800°C, 600°C-780°C, 600°C-750°C, 620°C-800°C, or 640°C-720°C.

In some embodiments, the compacted granules are sintered within a sintering temperature range of 600°C-800°C for 2-12 hours, optionally sintered at the sintering temperature for 2-10 hours, 4-12 hours, 2-10 hours, 4-8 hours, 6-12 hours, 6-10 hours, or 6-8 hours.

In some embodiments, during sintering, a heating rate is controlled to be 1°C/min-5°C/min for reaching the sintering temperature. Optionally, the heating rate is selected from 2°C/min-5°C/min, 3°C/min-5°C/min, 2°C/min-4°C/min, or 2°C/min-3°C/min. Alternatively, the heating rate is selected from 2°C/min, 2.5°C/min, 3°C/min, 3.5°C/min, or a range between any two of these values.

In the preparation method provided by this application, the raw material mixture is compacted and granulated before sintering, facilitating the timely expulsion of reducing gases generated from the decomposition of the carbon source during sintering, avoiding uneven decomposition of the carbon source at different positions in the sintering apparatus, and also ensuring uniform heating of the compacted granules at different positions in the sintering apparatus. After sintering, the carbon contents in the granules in the surface layer, middle portion, and bottom portion tend to be consistent. The carbon contents tend to be consistent, which results in a substantially consistent inhibition effect on the growth of raw material particles during the sintering reduction process, thereby improving the carbon content uniformity of the nanoscale primary particles.

In some embodiments, the preparation method includes: pulverizing the secondary particles obtained after sintering to achieve $D_v50$ of 0.45 μm-1.5 μm, optionally pulverizing the secondary particles to $D_v50$ selected from 0.5-1.5 μm, 0.8-1.5 μm, 0.7-1.5 μm, 1-1.5 μm, 0.45-1.3 μm, 0.45-1.0 μm, 0.5-1.0 μm, 0.6-1.5 μm, or 0.7-1.5 μm.

If $D_v50$ is too small, the overall particle size is small, increasing the proportion of small particles and reducing the surface stability of the material; and if $D_v50$ is too large, the overall particle size is small, increasing the proportion of large particles and enhancing the particle fracture effect during cycling. Both cases are not conducive to the improvement of the material stability.

When the secondary particles are pulverized until the particle size is within a suitable particle size range, the secondary particles undergo no structural damage or reduced structural damage caused by excessive lithium intercalation and deintercalation during charge-discharge processes. Additionally, this helps to reduce the degree of polarization of the secondary particles during charge-discharge processes, helps to achieve a more uniform current density on the surface of the secondary particles, and helps to improve the material stability, thereby fully utilizing the capacity of the positive electrode active material and improving the cycling performance.

In some embodiments, the preparation method includes: pulverizing the secondary particles to achieve a particle size distribution satisfying: $(D_v90-D_v10)/D_v50\leq3$, optionally less than or equal to 2.9, 2.8, 2.6, 2.5, 2.4, 2.3, 2.2, 2, 1.8, 1.4, 1.2, or 1.5. Optionally, the secondary particles are pulverized to achieve a particle size distribution satisfying: $1\leq(D_v90-D_v10)/D_v50\leq3$.

In the positive electrode active material, the particle size distribution of the secondary particles being within a suitable range helps to improve the particle size uniformity of the positive electrode active material, thereby further improving the cycling performance.

In some embodiments, the preparation method includes pulverizing the sintered secondary particles, so that at least a portion of the obtained positive electrode active material includes primary particles, where a particle size distribution of primary particles having a primary particle size greater than 80 nm and less than or equal to 180 nm in the positive electrode active material is less than or equal to 10%.

In some embodiments, the particle size distribution of the primary particles having a primary particle size greater than 80 nm and less than or equal to 180 nm in the positive electrode active material is less than or equal to 9.5%, 9%, 8.5%, 8%, 7%, 6%, 5%, 4%, 3%, 2%, or 1%, or the particle size distribution of the primary particles having a primary particle size greater than 50 nm and less than or equal to 200 nm in the positive electrode active material is selected from 0.1%-10%, 0.5%-10%, 1%-10%, 0.1%-8%, 0.1%-6%, 0.1%-4%, 0.1%-3%, 0.1%-2%, 0.1%-1%, 0.3%-5%, 0.8%-3%, or 0.1%-1.5%.

In the positive electrode active material prepared by the preparation method provided by this application, the particle size distribution of fine powder is significantly reduced, reducing side reactions between the fine powder and the electrolyte, slowing down the cycle life degradation of the positive electrode active material, and prolonging the cycle life of the positive electrode active material.

Additionally, the positive electrode active material prepared by the method reduces the particle size distribution of the fine powder, reducing side reactions between the positive electrode active material and a binder, and improving the processing performance of the positive electrode active material.

In some embodiments, the secondary particles are pulverized to ensure that in the obtained positive electrode active material, there are no more than 15 particles having a primary particle size greater than 1500 nm in a region of approximately 250 $\mu m^2$, optionally no more than 12, 10, 9, 8, 7, 6, 5, 4, 3, or 2 particles in the region of 250 $\mu m^2$.

In the positive electrode active material prepared by the method, the particle size distribution of oversized primary particles is significantly reduced, improving the mechanical integrity of the primary particles and secondary particles, slowing down the infiltration of the electrolyte into the positive electrode active material and the loss of a positive electrode active material (for example, lithium ions) during cycling. Additionally, electrical contact failure and capacity polarization loss caused by intergranular cracks in oversized primary particles are reduced, and the chemical and mechanical properties and cycling performance of the positive electrode active material are improved.

In some embodiments, the preparation method does not include repeated compacting and granulating.

The preparation method provided by this application has a simple process, high reproducibility, and relatively low costs, facilitating industrial mass production.

In some embodiments, the preparation method includes:

mixing raw materials including a lithium source, an iron source, a manganese source, a phosphorus source, a carbon source, and a forming aid with water, alcohol, or a mixed solvent, followed by grinding, drying, and compacting to obtain compacted granules; and loading the compacted granules, followed by sintering and pulverizing to obtain a positive electrode active material.

In some embodiments, the preparation method includes:

mixing raw materials including a lithium source, an iron source, a manganese source, a phosphorus source, a carbon source, and a forming aid with water, alcohol, or a mixed solvent, followed by grinding, drying, and compacting to obtain compacted granules with an average particle size controlled within a range of 3 mm-30 mm;
loading the compacted granules to a loading height of 5 cm-30 cm with a porosity of 5%-20%, followed by sintering; and
pulverizing the secondary particles obtained after sintering to $D_v50$ of 0.45 $\mu m$-1.5 $\mu m$ and/or $1\leq(D_v90-D_v10)/D_v50\leq3$, to obtain a positive electrode active material.

In some embodiments, the preparation method includes:

compacting and granulating: compacting and granulating raw materials including a lithium source, an iron source, a manganese source, a phosphorus source, a carbon source, an M source, and a forming aid to obtain compacted granules;

sintering: loading the compacted granules and sintering the compacted granules to obtain secondary particles; and

pulverizing: pulverizing the secondary particles to obtain a positive electrode active material.

In some embodiments, the preparation method includes:

compacting and granulating: grinding raw materials including a lithium source, an iron source, a manganese source, a phosphorus source, a carbon source, an M source, a forming aid, and a solvent to obtain a slurry; drying the slurry; and then compacting and granulating the slurry to obtain compacted granules;

sintering: loading the compacted granules and sintering the compacted granules to obtain secondary particles; and

pulverizing: pulverizing the secondary particles to obtain a positive electrode active material.

The raw materials are ground first, so that the particle size of the present oversized primary particles decreases, and the content of the oversized primary particles in the raw materials decreases, which helps to reduce the particle size distribution of the oversized primary particles in the prepared positive electrode active material. The particle sizes of different raw materials are reduced, facilitating the acquisition of nanoscale primary particles with a more uniform particle size. Additionally, the mixing uniformity of different raw materials is improved, helping to improve the uniformity of different components in the prepared positive electrode active material. Moreover, the drying process allows for suitable pores between raw material particles, facilitating the expulsion of reducing gases generated from the decomposition of the carbon source during sintering.

In some embodiments, the compacting and granulating step specifically includes:

(1-1) uniformly mixing initial reactants including a lithium source, an iron source, a manganese source, a phosphorus source, a carbon source, and an M source, followed by pre-sintering to obtain an initial product;

(1-2) mixing and grinding intermediate reactants including the initial product, a carbon source, and a forming aid to obtain an intermediate product; and

(2) compacting and granulating the intermediate product to obtain compacted granules,

where a mass content of the carbon source in step (1-1) is 2%-5%, based on a total mass of the initial reactants.

In some embodiments, based on the total mass of the initial reactants, the mass content of the carbon source in step (1-1) is optionally any value among 2%, 3%, 4%, and 5%, or a range between any two of these values.

A small amount of carbon source during pre-sintering can achieve a reduction function, enabling thorough mixing and reaction of the initial reactants, thereby improving the uniformity and completeness of the reaction, and achieving an initial product with excellent particle size uniformity. Pre-sintering allows ultrafine particles in the initial reactants to undergo pre-reaction, reducing the content of small particles in the raw materials and improving the particle size uniformity of the material. Additionally, further grinding of the intermediate reactants including the initial product, carbon source, and forming aid refines large particles, thereby reducing the content of oversized primary particles in the raw materials, further improving the particle size uniformity of the material, and providing a material foundation for the subsequent preparation of a positive electrode active material with excellent particle size uniformity.

In summary, pre-sintering can improve the particle size uniformity of the initial reactants, allowing the compacted and granulated intermediate product to have excellent particle size uniformity, thereby helping to improve the uniformity of different components in the prepared positive electrode active material.

In some embodiments, $D_v50$ of the intermediate product is 0.45 $\mu$m-1.25 $\mu$m, and $D_v10$ of the intermediate product is greater than or equal to 0.15 $\mu$m.

In some embodiments, $D_v50$ of the intermediate product is optionally any value among 0.45 $\mu$m, 0.55 $\mu$m, 0.65 $\mu$m, 0.75 $\mu$m, 0.85 $\mu$m, 0.95 $\mu$m, 1.05 $\mu$m, 1.15 $\mu$m, and 1.25 $\mu$m, or a range between any two of these values.

In some embodiments, $D_v10$ of the intermediate product is optionally greater than or equal to 0.15 $\mu$m, greater than or equal to 0.16 $\mu$m, greater than or equal to 0.17 $\mu$m, greater than or equal to 0.18 $\mu$m, greater than or equal to 0.19 $\mu$m, or greater than or equal to 0.20 $\mu$m.

Controlling $D_v50$ and $D_v10$ of the intermediate product within suitable ranges is conducive to controlling the mass content of small particles in the positive electrode active material, further improving the particle size uniformity of the positive electrode active material, improving the structural stability of the positive electrode active material, and improving the cycling performance of the battery.

This application further provides a positive electrode active material prepared by the method.

This application further provides a use of a positive electrode active material prepared by the method in a secondary battery.

**Positive electrode plate**

The positive electrode plate of this application includes a positive electrode current collector, and a positive electrode film layer disposed on at least one surface of the positive electrode current collector and including the positive electrode active material of any of the embodiments. For example, the positive electrode current collector has two opposite surfaces in its thickness direction, and the positive electrode film layer is disposed on either or both of the two opposite surfaces of the positive electrode current collector.

In the secondary battery of this application, the positive electrode film layer typically includes a positive electrode active material, an optional binder, and an optional conductive agent. The positive electrode film layer is typically formed by applying a positive electrode slurry onto the positive electrode current collector, followed by drying and cold-pressing. The positive electrode slurry is typically formed by dispersing the positive electrode active material, the optional conductive agent, the optional binder, and any other components in a solvent and stirring them uniformly. The solvent may be N-methylpyrrolidone (NMP), but is not limited thereto. The types and contents of the conductive agent and binder are not specifically limited and can be selected based on actual needs. In an example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In an example, the conductive agent may include one or more of superconducting carbon, acetylene black, carbon black, Ketjen black, carbon dots, carbon nanotubes, graphene, and carbon nanofiber.

In the secondary battery of this application, the positive electrode current collector may be a metal foil or a composite current collector. As an example of the metal foil, an aluminum foil may be used as the positive electrode current collector. The composite current collector may include a polymer material substrate and a metal material layer formed on at least one surface of the polymer material substrate. In an example, the metal material may be selected from one or more of aluminum, aluminum alloy, nickel, nickel alloy, titanium, titanium alloy, silver, and silver alloy. In an example, the polymer material substrate may be selected from polypropylene, polyethylene terephthalate, polybutylene terephthalate, polystyrene, polyethylene, and the like.

**Preparation method of positive electrode plate**

This application provides a preparation method of a positive electrode plate, where the preparation method specifically includes:

compacting and granulating: compacting and granulating raw materials including a lithium source, an iron source, a manganese source, a phosphorus source, a carbon source, an M source, and a forming aid to obtain compacted granules;
sintering: loading the compacted granules and sintering the compacted granules to obtain secondary particles;
pulverizing: pulverizing the secondary particles to obtain a positive electrode active material; and
coating: applying a positive electrode slurry containing the positive electrode active material onto at least one side of a current collector to form a positive electrode plate,
where the positive electrode active material includes a substrate and a carbon coating layer disposed on a surface of the substrate, and the substrate has a general formula $Li_zFe_xMn_{(1-x-y)}M_yPO_4$, where $0.5 \leq x \leq 1$, $0 \leq y \leq 0.1$, $1 \leq z \leq 1.1$, and M is at least one selected from Ti, V, and Mg;
at least a portion of the positive electrode active material includes primary particles, and a particle size distribution of primary particles having a primary particle size greater than 80 nm and less than or equal to 180 nm in the positive electrode active material is less than or equal to 10%; and
there are no more than 15 primary particles having a primary particle size greater than 1500 nm in a region of $(250 \pm 5)$ $\mu m^2$ in a cross section obtained by cutting the positive electrode plate.

In the positive electrode plate obtained by the above preparation method, the particle size distributions of primary particles having a primary particle size greater than 1500 nm and primary particles having a primary particle size greater than 80 nm and less than or equal to 180 nm in the positive electrode active material are controlled within suitable ranges, which can improve the cycling stability of the positive electrode active material, improve the cycling stability of the positive electrode plate, and improve the room-temperature cycling performance and high-temperature cycling performance of the battery.

In some embodiments, an average particle size of the compacted granules in the compacting and granulating step is 3 mm-30 mm. In some embodiments, the average particle size of the compacted granules in the compacting and granulating step is optionally any value among 3 mm, 5 mm, 10 mm, 15 mm, 20 mm, 25 mm, and 30 mm, or a range between any two of these values.

The compacted granules being within a suitable range helps to improve the uniformity of different raw materials within the granules, and the pores between the granules facilitate the expulsion of reducing gases generated from the decomposition of the carbon source during preparation, improving the uniformity of carbon at different positions in the sintering apparatus (for example, sagger).

In some embodiments, a compacted density of the compacted granules is 1.0 g/cm$^3$ or higher, or 1.2-3.0 g/cm$^3$.

In some embodiments, the compacted density of the compacted granules is optionally any value among 1.0 g/cm$^3$, 1.2 g/cm$^3$, 1.4 g/cm$^3$, 1.6 g/cm$^3$, 1.8 g/cm$^3$, 2.0 g/cm$^3$, 2.2 g/cm$^3$, 2.4 g/cm$^3$, 2.6 g/cm$^3$, 2.8 g/cm$^3$, and 3.0 g/cm$^3$, or a range between any two of these values.

Controlling the compacted density of the compacted granules within a suitable range helps to increase the loading capacity of the sagger during preparation, thereby improving sintering productivity.

In some embodiments, the sintering step specifically includes loading the compacted granules to a loading height of 5 cm-30 cm and sintering the compacted granules to obtain secondary particles.

In some embodiments, the sintering step specifically includes loading the compacted granules to a loading height which is optionally 8 cm-30 cm, 8 cm-20 cm, 5 cm-25 cm, 5 cm-20 cm, 10 cm-30 cm, 10 cm-25 cm, or 10 cm-20 cm.

Controlling the loading height of the compacted granules during sintering within a suitable range helps to promptly expel reducing gases generated from the decomposition of the carbon source during sintering, facilitating heat transfer, and avoiding uneven decomposition of the carbon source in the compacted granules at different positions in the sintering apparatus, thereby improving the consistency of granule growth and also ensuring productivity.

In some embodiments, the pulverizing step specifically includes pulverizing the secondary particles to achieve $D_v50$ of 0.45 μm-1.5 μm; and pulverizing the secondary particles to achieve a particle size distribution satisfying: $(D_v90-D_v10)/D_v50 \leq 3$.

In some embodiments, the pulverizing step specifically includes pulverizing the secondary particles to achieve $D_v50$ which is optionally any value among 0.45 μm, 0.5 μm, 0.7 μm, 0.9 μm, 1.0 μm, 1.2 μm, 1.4 μm, and 1.5 μm, or a range between any two of these values.

In some embodiments, pulverizing the secondary particles to achieve a particle size distribution satisfying: $(D_v90-D_v10)/D_v50 \leq 3$, $(D_v90-D_v10)/D_v50 \leq 2.5$, $(D_v90-D_v10)/D_v50 \leq 2$, or $(D_v90-D_v10)/D_v50 \leq 1.5$.

Pulverizing the secondary particles to achieve a particle size distribution within the ranges helps to improve the particle size uniformity and cycling stability of the positive electrode active material.

In some embodiments, a sintering temperature in the sintering step is 600°C-800°C; and/or, a constant-temperature sintering time in the sintering step is 2 h-12 h.

In some embodiments, the sintering temperature is optionally any value among 600°C, 650°C, 700°C, 750°C, and 800°C, or a range between any two of these values.

In some embodiments, the sintering time is optionally any value among 2 h, 4 h, 6 h, 8 h, 10 h, and 12 h, or a range between any two of these values.

Controlling the sintering temperature and/or sintering time within a suitable range ensures sufficient sintering of the compacted granules, allowing the positive electrode active material to have excellent structural parameters.

In some embodiments, the compacting and granulating step specifically includes:

(1) grinding raw materials including a lithium source, an iron source, a manganese source, a phosphorus source, a carbon source, an M source, a forming aid, and a solvent to obtain a slurry; drying the slurry; and then compacting and granulating the slurry to obtain compacted granules.

The raw materials are ground first, so that the particle size of the present oversized primary particles decreases, and the content of the oversized primary particles in the raw materials decreases, which helps to reduce the particle size distribution of the oversized primary particles in the prepared positive electrode active material. The particle sizes of different raw materials are reduced, facilitating the acquisition of nanoscale primary particles with a more uniform particle size. Additionally, the mixing uniformity of different raw materials is improved, helping to improve the uniformity of different components in the prepared positive electrode active material. Moreover, the drying process allows for suitable pores between raw material particles, facilitating the expulsion of reducing gases generated from the decomposition of the carbon source during sintering.

In some embodiments, the compacting and granulating step specifically includes:

(1-1) uniformly mixing initial reactants including a lithium source, an iron source, a manganese source, a phosphorus source, a carbon source, and an M source, followed by pre-sintering to obtain an initial product;
(1-2) mixing and grinding intermediate reactants including the initial product, a carbon source, and a forming aid to obtain an intermediate product; and
(2) compacting and granulating the intermediate product to obtain compacted granules,
where a mass content of the carbon source in step (1-1) is 2%-5%, based on a total mass of the initial reactants.

In some embodiments, based on the total mass of the initial reactants, the mass content of the carbon source in step (1-1) is optionally any value among 2%, 3%, 4%, and 5%, or a range between any two of these values.

A small amount of carbon source during pre-sintering can achieve a reduction function, enabling thorough mixing and reaction of the initial reactants, thereby improving the uniformity and completeness of the reaction, and achieving an initial product with excellent particle size uniformity. Pre-sintering allows ultrafine particles in the initial reactants to undergo pre-reaction, reducing the content of small particles in the raw materials and improving the particle size uniformity of the material. Additionally, further grinding of the intermediate reactants including the initial product, carbon source, and forming aid refines large particles, thereby reducing the content of oversized primary particles in the raw materials, further improving the particle size uniformity of the material, and providing a material foundation for the subsequent preparation of a positive electrode active material with excellent particle size uniformity.

In summary, pre-sintering can improve the particle size uniformity of the initial reactants, allowing the compacted and granulated intermediate product to have excellent particle size uniformity, thereby helping to improve the uniformity of different components in the prepared positive electrode active material.

In some embodiments, $D_v50$ of the intermediate product is 0.45 $\mu$m-1.25 $\mu$m, and $D_v10$ of the intermediate product is greater than or equal to 0.15 $\mu$m.

In some embodiments, $D_v50$ of the intermediate product is optionally any value among 0.45 $\mu$m, 0.55 $\mu$m, 0.65 $\mu$m, 0.75 $\mu$m, 0.85 $\mu$m, 0.95 $\mu$m, 1.05 $\mu$m, 1.15 $\mu$m, and 1.25 $\mu$m, or a range between any two of these values.

In some embodiments, $D_v10$ of the intermediate product is optionally any one of greater than or equal to 0.15 $\mu$m, greater than or equal to 0.16 $\mu$m, greater than or equal to 0.17 $\mu$m, greater than or equal to 0.18 $\mu$m, greater than or equal to 0.19 $\mu$m, or greater than or equal to 0.20 $\mu$m.

Controlling $D_v50$ and $D_v10$ of the intermediate product within suitable ranges is conducive to controlling the mass content of small particles in the positive electrode active material, further improving the particle size uniformity of the positive electrode active material, improving the structural stability of the positive electrode active material, and improving the cycling performance of the battery.

**Secondary battery**

This application provides a secondary battery. The secondary battery includes a positive electrode plate, a separator, a negative electrode plate, and an electrolyte according to any of the embodiments.

In some embodiments, the negative electrode plate includes a negative electrode current collector and a negative electrode film layer disposed on at least one surface of the negative electrode current collector, where the negative electrode film layer includes a negative electrode active material.

In the secondary battery of this application, the negative electrode film layer typically includes a negative electrode active material, an optional binder, an optional conductive agent, and other optional additives.

In some embodiments, the negative electrode active material includes at least one of artificial graphite, natural graphite, soft carbon, hard carbon, mesocarbon microbeads, a silicon-based material, and a tin-based material.

The negative electrode film layer is typically formed by applying a negative electrode slurry onto the negative electrode current collector, followed by drying and cold-pressing. The negative electrode slurry is typically formed by dispersing the negative electrode active material, the optional conductive agent, the optional binder, and the other optional additives in a solvent and stirring them uniformly. The solvent may be N-methylpyrrolidone (NMP) or deionized water, but is not limited thereto. The types and contents of the conductive agent and binder are not specifically limited and can be selected based on actual needs. In an example, the conductive agent may include one or more of superconducting carbon, carbon black (for example, acetylene black and Ketjen black), carbon dots, carbon nanotubes, graphene, and carbon nanofiber. In an example, the binder may include one or more of styrene-butadiene rubber (SBR), water-soluble unsaturated resin SR-1B, aqueous acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS). Other optional additives may include a thickener (for example, sodium carboxymethyl cellulose CMC-Na), a PTC thermistor material, and the like.

In the secondary battery of this application, the negative electrode film layer may be disposed on one side of the negative electrode current collector or on both sides of the negative electrode current collector. For example, the negative electrode current collector has two opposite sides in its thickness direction, and the negative electrode film layer is disposed on either or both of the opposite sides of the negative electrode current collector.

In the secondary battery of this application, the type of negative electrode current collector is not specifically limited and can be selected based on actual needs.

In the secondary battery of this application, the negative electrode current collector may be a metal foil or a composite current collector. For example, as an example of the metal foil, a copper foil may be used as the negative electrode current collector. The composite current collector may include a polymer material substrate and a metal material layer formed on at least one surface of the polymer material substrate. In an example, the metal material may be selected from one or more of copper, copper alloy, nickel, nickel alloy, titanium, titanium alloy, silver, and silver alloy. In an example, the polymer material substrate may be selected from polypropylene (PP), polyethylene terephthalate (PET), polybutylene terephthalate (PBT), polystyrene (PS), polyethylene (PE), or the like.

It should be noted that the parameters (for example, thickness and compacted density) of the negative electrode film layer provided in this application all refer to the parameters of the negative electrode film layer on one side of the negative electrode current collector. When the negative electrode film layer is disposed on both sides of the negative electrode current collector, the parameters of the negative electrode film layer on either side satisfying this application are considered to fall within the protection scope of this application. The ranges of the thickness, compacted density, and the like of the negative electrode film layer described in this application all refer to the parameters of a cold-pressed and compacted negative electrode film layer for battery assembly.

Additionally, in the secondary battery of this application, the negative electrode plate does not exclude additional functional layers other than the negative electrode film layer. For example, in some embodiments, the negative electrode plate of this application may further include a conductive undercoating (for example, including a conductive agent and a binder) disposed between the negative electrode current collector and the negative electrode film layer. In some other embodiments, the negative electrode plate of this application further includes a protective layer covering a surface of the negative electrode film layer.

The electrolyte conducts ions between the positive electrode plate and the negative electrode plate. The type of the electrolyte is not specifically limited in this application and can be selected based on needs. For example, the electrolyte may be in a liquid state, a gel state, or a full-solid state.

In some embodiments, the electrolyte is a liquid electrolyte. The liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive or a positive electrode film-forming additive, and may further include an additive capable of improving certain battery performance, such as an additive capable of improving overcharge performance of the battery, or an additive capable of improving high-temperature or low-temperature performance of the battery.

In the secondary battery of this application, the type of the separator is not specifically limited, and any well-known porous structure separator with good chemical and mechanical stability can be used.

In some embodiments, the material of the separator may be at least one selected from glass fiber, nonwoven fabric, polyethylene, polypropylene, and polyvinylidene fluoride. The separator may be a single-layer film or a multilayer composite film, without specific limitation. When the separator is a multilayer composite film, the materials of the layers may be the same or different, without specific limitation.

In some embodiments, the outer packaging of the secondary battery may be a hard shell, such as a hard plastic shell, an aluminum shell, or a steel shell. The outer packaging of the secondary battery may also alternatively a soft package, such as a pouch-type soft package. The material of the soft package may be plastic. The plastic includes, for example, polypropylene, polybutylene terephthalate, and polybutylene succinate.

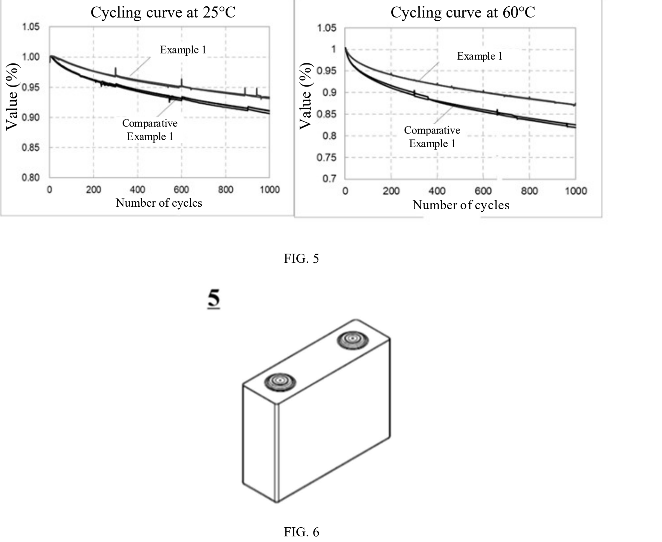

The battery is not limited to any particular shape in this application and may be cylindrical, prismatic, or of any other shape. For example, FIG. 6 shows a secondary battery 5 of a prismatic structure as an example.

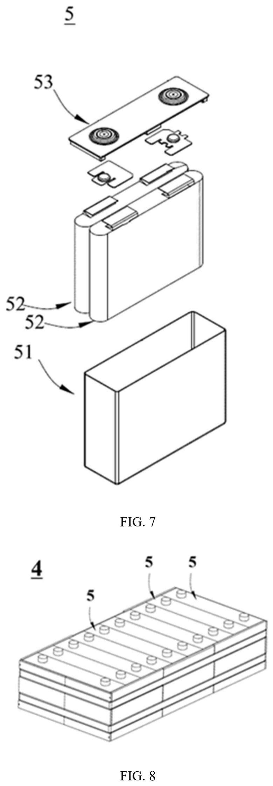

In some embodiments, referring to FIG. 7, the outer packaging may include a shell 51 and a cover plate 53. The shell 51 may include a bottom plate and side plates connected to the bottom plate, with the bottom plate and side plates enclosing an accommodating cavity. The shell 51 has an opening communicating with the accommodating cavity, and the cover plate 53 can cover the opening to seal the accommodating cavity. The positive electrode plate, negative electrode plate, and separator can be wound or laminated to form an electrode assembly 5. The electrode assembly 52 is packaged in the accommodating cavity. The electrolyte infiltrates the electrode assembly 52. There may be one or more electrode assemblies 52 included in the secondary battery 5, and those skilled in the art can select based on specific actual needs.

In some embodiments, the secondary battery may be assembled into a battery module. The battery module may include one or more secondary batteries. The specific number can be selected by those skilled in the art according to the use and capacity of the battery module.

FIG. 8 shows a battery module 4 as an example. Referring to FIG. 8, in the battery module 4, multiple secondary batteries 5 may be sequentially arranged along a length direction of the battery module 4. Certainly, they may alternatively be arranged in any other manner. Further, the multiple secondary batteries 5 may be fixed through fasteners.

Optionally, the battery module 4 may further include a housing with an accommodating space, and the multiple secondary batteries 5 are accommodated in the accommodating space.

In some embodiments, the above battery module may alternatively be assembled into a battery pack, the battery pack may include one or more battery modules, and the specific number can be selected by those skilled in the art according to the use and capacity of the battery pack.

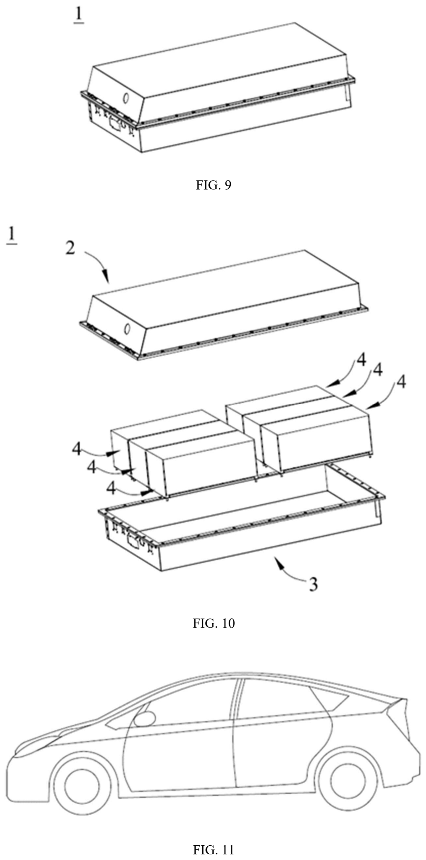

FIG. 9 and FIG. 10 show a battery pack 1 as an example. Referring to FIG. 9 and FIG. 10, the battery pack 1 may include a battery box and multiple battery modules 4 arranged in the battery box. The battery box includes an upper box body 2 and a lower box body 3, where the upper box body 2 can cover the lower box body 3 to form a closed space for accommodating the battery modules 4. The multiple battery modules 4 may be arranged in the battery box in any manner.

**Electric apparatus**

This application further provides an electric apparatus. The electric apparatus includes at least one of the secondary battery, battery module, or battery pack provided by this application. The secondary battery, battery module, or battery pack can be used as a power source for the electric apparatus or as an energy storage unit for the electric apparatus. The electric apparatus may include mobile devices (for example, mobile phones and laptops), electric vehicles (for example, battery electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

The secondary battery, battery module, or battery pack can be selected for the electric apparatus based on the requirements for using the electric apparatus.

FIG. 11 shows an electric apparatus as an example. The electric apparatus is a battery electric vehicle, a hybrid electric vehicle, a plug-in hybrid electric vehicle, or the like. To meet the high power and high energy density requirements of the electric apparatus for secondary batteries, a battery pack or a battery module may be used.

In another example, the apparatus may be a mobile phone, a tablet computer, a laptop, or the like. Such apparatus is typically required to be thin and light and may use a secondary battery as a power source.

In conclusion, it should be noted that the above embodiments are only used to illustrate the technical solutions of this application rather than to limit them; although this application has been described in detail with reference to the foregoing embodiments, those of ordinary skill in the art should understand that they can still modify the technical solutions described in the foregoing embodiments or make equivalent substitutions for some or all of the technical features; and these modifications or substitutions do not cause the essence of the corresponding technical solutions to depart from the scope of the technical solutions of the embodiments of this application, and they all should be included within the scope of the claims and specification of this application. In particular, as long as there is no conflict, the various technical features mentioned in the embodiments can be combined in any manner. This application is not limited to the specific embodiments disclosed herein but includes all technical solutions falling within the scope of the claims.

**Examples**

The following describes examples of this application. The examples described below are exemplary and are only used to explain this application and cannot be construed as limiting this application. For examples in which specific techniques or conditions are not specified, reference is made to the techniques or conditions described in the literature in the field or according to product instructions. The reagents or instruments used are all conventional products commercially available if no manufacturer is indicated.

**I. Preparation of battery**

Example 1

(1) Preparation of positive electrode active material

Lithium carbonate, ferric oxide, ammonium dihydrogen phosphate, and titanium dioxide were respectively weighed, where a mass ratio of Li:Fe:P was 1.01:0.99:1.01, and a mass ratio of titanium dioxide to lithium carbonate was 1:105. The resulting mixture was added with water and mixed uniformly to obtain a slurry, and then the slurry was added with sucrose with a mass fraction of 8% relative to all solid raw materials and starch with a mass fraction of 1% relative to all solid raw materials, where a solid content of the slurry was 40%.

The uniformly mixed slurry was ground in a ball mill until $D_v50$ was approximately 0.5 μm, followed by spray drying (a negative pressure of a high-speed spray dryer was -650 Pa to -200 Pa, an inlet temperature was 300°C-360°C, and an outlet temperature was 100°C-140°C). A granulator was used to compact and granulate the powder obtained after spray drying, where an average particle size was approximately 10 mm and a compacted density of the granules was 1.2-1.5 g/cm$^3$. The granulated reactants were loaded into a graphite sagger, with a material loading depth of 12 cm. The sagger with the loaded reactants was placed in a kiln for sintering, where a heating rate was controlled to be 3°C/min, a holding temperature was controlled to be 750°C, and a temperature holding time was 6-8 hours. After the material was cooled, the material was pulverized using an air jet mill or a mechanical mill until the $D_v50$ was approximately 1.1 μm, to obtain a positive electrode active material $LiFe_{0.995}Ti_{0.005}PO_4@C$, where a content of the Ti element in the positive electrode active material is 1500 ppm.

(2) Preparation of positive electrode plate

As a binder, 2.0wt% of polyvinylidene fluoride binder was fully dissolved in N-methylpyrrolidone (NMP), then added with 1.0wt% of Super P, 0.5wt% of carbon nanotubes, and 96.5wt% of the above positive electrode active material, stirred and mixed uniformly to obtain a positive electrode slurry. The slurry was uniformly applied onto a surface of a current collector aluminum foil, and then the aluminum foil was transferred to a vacuum drying oven for complete drying. The dried electrode plate was rolled and punched to obtain a positive electrode plate with a compacted density of 2.35 g/cm$^3$.

(3) Preparation of negative electrode plate

An active material artificial graphite, a conductive agent carbon black, a binder styrene-butadiene rubber (SBR), and a thickener sodium carboxymethyl cellulose (CMC-Na) were dissolved in deionized water at a weight ratio of 96.7:1.3:0.8:1.2, and mixed uniformly to prepare a negative electrode slurry; and the negative electrode slurry was uniformly applied onto a negative electrode current collector copper foil once or multiple times, followed by drying, cold pressing, and slitting to obtain a negative electrode plate.

(4) Electrolyte

In an argon atmosphere glove box ($H_2O$ < 0.1 ppm, and $O_2$ < 0.1 ppm), organic solvents ethylene carbonate (EC) and ethyl methyl carbonate (EMC) were uniformly mixed at a volume ratio of 3:7, and a $LiPF_6$ lithium salt was dissolved in the organic solvents to prepare a solution with a mass percentage of 12.5%, which was the electrolyte.

(5) Separator

A polypropylene film was used as the separator.

(6) Preparation of battery

The positive electrode plate, separator, and negative electrode plate were stacked in sequence, with the separator disposed between the positive and negative electrode plates for isolation, and then are wound to obtain an electrode assembly. The electrode assembly was placed in a battery shell and dried, and then the electrolyte was injected, followed by processes such as standing, hot and cold pressing, formation, shaping, and capacity testing to obtain a lithium battery product of Example 1.

The preparation methods for Examples 2 to 10 were similar to that of Example 1, with specific parameter adjustments shown in Table 1.

The preparation method for Example 11 was similar to that of Example 1, but magnesium hydroxide was used for adjustment, and a mass ratio of magnesium hydroxide to lithium carbonate was 0.73:105.

The preparation method for Example 12 was similar to that of Example 1, but vanadium pentoxide was used for adjustment, and a mass ratio of vanadium pentoxide to lithium carbonate was 1.138:105.

The preparation method for Example 13 was similar to that of Example 1, but no doping element was added to the raw materials, with specific parameters shown in Table 1.

The preparation method for Example 14 was similar to that of Example 1, but the preparation process of the positive electrode active material was adjusted as follows.

(1) Preparation of positive electrode active material

Compacting and granulating:

(1) Lithium carbonate, ferric oxide, ammonium dihydrogen phosphate, and titanium dioxide were respectively weighed, where a mass ratio of Li:Fe:P was 1.01:0.99:1.01, and a mass ratio of titanium dioxide to lithium carbonate was 1:105. The resulting mixture was added with water and mixed uniformly to obtain a slurry, and then the slurry was added with sucrose with a mass fraction of 2% relative to all solid raw materials, where a solid content of the slurry was 40%. The uniformly mixed slurry was ground in a ball mill until $D_v50$ was approximately 0.5 $\mu$m, followed by spray drying (a negative pressure of a high-speed spray dryer was -320 Pa, an inlet temperature was 320°C, and an outlet temperature was 110°C). The dried material was loaded into a sagger, and the sagger was placed in a kiln for sintering, where a heating rate was controlled to be 5°C/min, a holding temperature was controlled to be 750°C, and a temperature holding time was 6 hours.

(2) After the material was cooled, the material was pulverized using a mechanical mill. The pulverized material, sucrose, and starch were mixed with water to obtain a slurry, where based on a total mass of solid substances in the slurry, a mass fraction of sucrose was 6%, and a mass fraction of starch was 2%. The obtained slurry was ground in a ball mill until $D_v50$ was 0.5 $\mu$m and $D_v10$ was 0.12 $\mu$m for the slurry (that was, the intermediate product in Table 1), followed by spray drying (a negative pressure of a high-speed spray dryer was -320 Pa, an inlet temperature was 320°C, and an outlet temperature was 110°C).

(3) The dried powder was compacted and granulated, where an average particle size was approximately 10 mm and a compacted density of the granules was 1.6 g/cm³.

Sintering: The granulated reactants were loaded into a graphite sagger, with a material loading depth of 12 cm. The sagger with the loaded reactants was placed in a kiln for sintering, where a heating rate was controlled to be 3°C/min, a holding temperature was controlled to be 750°C, and a holding time was 6 hours.

Pulverizing: After the material was cooled, the material was pulverized using an air jet mill or a mechanical mill until $D_v50$ was 1 $\mu$m, to obtain a positive electrode active material $LiFe_{0.995}Ti_{0.005}PO_4@C$, where a content of the Ti element in the positive electrode active material was 1500 ppm.

The preparation methods for Examples 15 and 16 were similar to that of Example 14, with specific preparation parameters shown in Table 1.

Comparative Example 1

The preparation method of the battery of Comparative Example 1 was similar to that of the battery of Example 1, differing from Example 1 in that no compacting and granulating was performed, no forming aid was added, and sintering reaction was directly performed after spray drying.

Comparative Example 2

The preparation method of the battery of Comparative Example 2 was similar to that of the battery of Example 1, differing from Example 1 in that no compacting and granulating additive was added.

The preparation methods for Comparative Examples 3 to 6 were similar to that of Example 1, with specific parameter adjustments shown in Table 1.

The preparation method of the battery of Comparative Example 7 was similar to that of the battery of Example 1, but the preparation method of the active material was adjusted as follows.

(A) Anhydrous iron phosphate and lithium carbonate were weighed at a molar ratio of 1:0.5, mixed with 0.2wt% of titanium dioxide as an ion doping additive, and then added with pure water to form a slurry, and then the slurry was ball-milled.

(B) The ball-milled slurry was transferred to a sand mill for sanding, where the particle size $D_v50$ of a sanded product was controlled to be 0.8 $\mu$m.

(C) 5wt% of glucose was added as an organic carbon source to the sanded slurry, a temperature of the slurry was maintained at 80°C-85°C (specifically 80°C), the slurry was stirred slowly for 2 h, and then spray drying was performed to obtain carbon-coated lithium iron phosphate precursor powder.

(D) The precursor powder was transferred to a sintering furnace, heated from room temperature to 380°C at a heating rate of 10°C/min under a nitrogen protective atmosphere, maintained at the temperature for 4 h, then heated to 700°C at a heating rate of 10°C/min for sintering for 10 hours, and then cooled naturally to obtain sintered powder.

(E) The sintered material was pulverized using an air jet mill, where a range of the particle size $D_v10$ for pulverization

was controlled to be 0.41 $\mu$m, a range of the particle size $D_v50$ was controlled to be 1.08 $\mu$m, and a range of the particle size $D_v90$ was controlled to be 3.3 $\mu$m. Then, the material was sieved, and iron was removed with a current to obtain a carbon-coated lithium iron phosphate positive electrode active material (a mass percentage of carbon applied onto the surface of the lithium iron phosphate material was 1.35%).

## II. Performance test

### 1. Test for volume-based average particle sizes $D_v10$, D50, and $D_v90$

Device model: Malvern 2000 (MasterSizer 2000) laser particle size analyzer, and reference standard procedure: GB/T19077-2016/ISO 13320:2009.

Specific test procedure: An appropriate amount of a to-be-tested sample (a concentration of the sample should ensure a shading rate of 8%-12%) was taken, added with 20 ml deionized water, and subjected to ultrasonic treatment for 5 min (53 kHz/120 W) until the sample was fully dispersed, and then the sample was measured according to the GB/T19077-2016/ISO 13320:2009 standard.

### 2. Morphology test

The positive electrode active materials prepared in the examples and comparative examples were tested using a ZEISS Sigma 300 scanning electron microscope, and the sample morphology were observed with reference to the standard JY/T010-1996.

### 3. Measurement method for primary particle size in positive electrode plate

The electrode plate was cut using an argon ion beam perpendicular to a large surface of the electrode plate, a cross section was exposed, and the cross section was photographed using the SEM.

The particle sizes of the particles were counted based on an equivalent circle area.

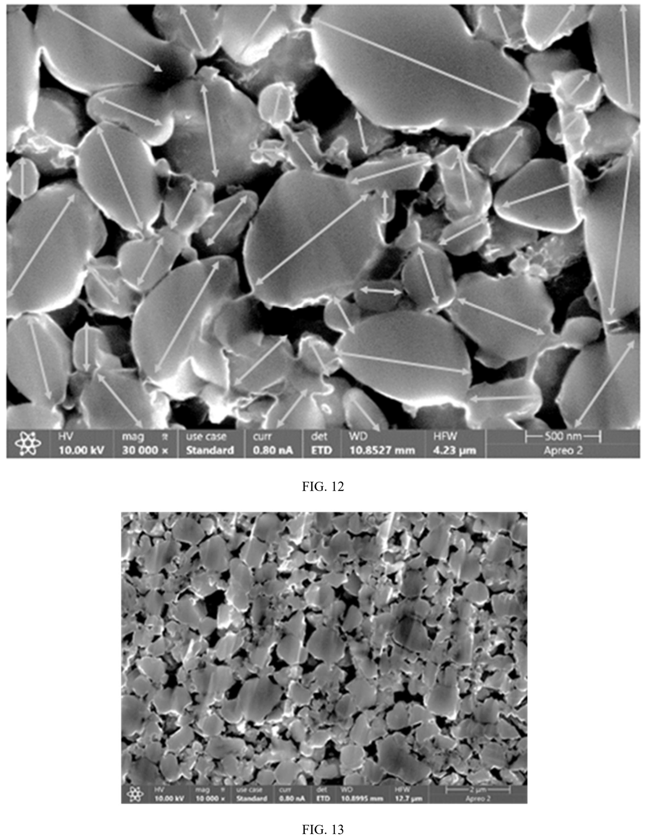

Taking FIG. 12 as an example, FIG. 12 shows a SEM image of a cross section of an electrode plate, where double arrows in the figure indicate a long diameter of primary particles in a positive electrode plate, and particle sizes of the primary particles were measured and counted.

The particle size in this patent is an equivalent circle diameter based on area, and the area of each particle can be counted using graphic software.

### 4. Particle size distribution index of primary particles with primary particle size greater than 100 nm and less than or equal to 1500 nm in region of $(250\pm5)$ $\mu m^2$ in cross section obtained by cutting positive electrode plate

The electrode plate was cut using an argon ion beam perpendicular to a large surface of the electrode plate, a cross section was exposed, the cross section was photographed using a scanning electron microscope, and a particle size of the active material was statistically analyzed using an equivalent circle area statistical method, as shown in FIG. 13.

The particle size distribution index PDI is a quotient of a standard deviation of a particle size $\sigma$ divided by an average particle size $\bar{x}$;

$$PDI = \sigma/\bar{x}$$

$$\sigma = \sqrt{\frac{\sum_{i=1}^{n}(x_i - \overline{x})^2}{n}}$$

where $\sigma$ is the standard deviation of particle size, $x_i$ is the particle size value, $x_i$ is the average particle size, n is a total number of the particles counted,

the average particle size $\bar{x}$ is a quotient of the total particle size value of the primary particles having a primary particle size greater than 100 nm and less than or equal to 1500 nm divided by the number of the primary particles having a primary particle size greater than 100 nm and less than or equal to 1500 nm,

the particle size value $x_i$ is the particle size value of the primary particles having a primary particle size greater than 100 nm and less than or equal to 1500 nm, and

the total number n of the particles counted is the number of primary particles having a primary particle size greater than 100 nm and less than or equal to 1500 nm in a region of $(250 \pm 5)$ $\mu m^2$ in a cross section obtained by cutting the positive electrode plate.

5. Battery performance test

(1) Capacity retention rate test at 25°C

The capacity retention rate test procedure was as follows: At 25°C, the prepared battery was charged at a constant current of 1C to 3.65 V, then charged at a constant voltage of 3.65 V until the current dropped to 0.05C, and then discharged at 1C to 2.5 V, and a capacity obtained was recorded as an initial capacity (C0). The above steps were repeated for a same battery, and a discharge capacity (Cn) of the battery after the n-th cycle was recorded, and capacity retention rate after each cycle Pn = Cn/C0 × 100%. The capacity retention rate after 1000 cycles was tested under the above test conditions.

(2) Capacity retention rate test at 60°C

The capacity retention rate test procedure was as follows: At 60°C, the prepared battery was charged at a constant current of 1C to 3.65 V, then charged at a constant voltage of 3.65 V until the current dropped to 0.05C, and then discharged at 1C to 2.5 V; and a capacity obtained was recorded as an initial capacity (C0). The above steps were repeated for a same battery, and a discharge capacity (Cn) of the battery after the n-th cycle was recorded, and capacity retention rate after each cycle Pn = Cn/C0 × 100%. The capacity retention rate after 1000 cycles was tested under the above test conditions.

6. Content measurement of doping elements Ti, V, and Mg

According to methods well known in the art, a mixed acid of HF, $HNO_3$, and HCl was prepared to dissolve a sample to ensure that titanium, vanadium, and Mg in the positive electrode material were fully dissolved in the solution, and the Ti, V, and Mg elements were tested using inductively coupled plasma atomic emission spectroscopy.

7. Evaluation of carbon distribution uniformity

The sintered and cooled material that was not pulverized was divided into upper, middle, and lower layers based on a height of the material loaded in a graphite sagger, samples were selected, a carbon content was determined with reference to a carbon content measurement method (using an infrared carbon-sulfur tester) in GB/T 33822-2017, an average value of carbon contents of the upper, middle, and lower layers was calculated, and a difference (that was, a difference between a maximum value and a minimum value) was calculated based on the average value of the carbon contents of the upper, middle, and lower layers.

The sintered and cooled material that was not pulverized was taken to measure a carbon content of the prepared positive electrode active material with reference to the carbon content measurement method (using an infrared carbon-sulfur tester) in GB/T 33822-2017.

When a ratio of the difference to the carbon content of the positive electrode active material did not exceed 10%, it was determined that the carbon distribution uniformity was good; when the ratio was greater than 10% and did not exceed 20%, it was determined that the carbon distribution uniformity was relatively good; when the ratio was greater than 20% and did not exceed 30%, it was determined that the carbon distribution uniformity was relatively poor; and when the ratio was greater than 30%, it was determined that the carbon distribution uniformity was poor.

## III. Analysis of test results of examples and comparative examples

FIG. 2 shows a SEM image of a positive electrode active material prepared in Example 1, and it can be seen that the positive electrode active material achieves a very uniform primary particle size distribution with low content of fine powder and large particles.

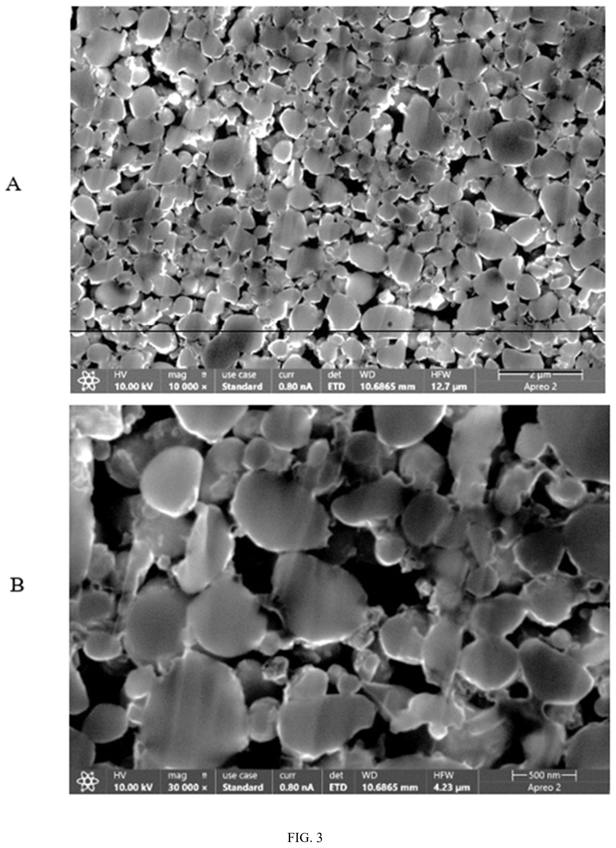

FIG. 3A and FIG. 3B show scanning electron microscope photographs of a cross section obtained by cutting the positive electrode plate prepared in Example 1 by using an argon ion beam, clearly showing a uniform particle size distribution with an extremely low content of fine powder and large particles in the positive electrode active material, where a proportion of nanoparticles with a diameter less than 80 nm is below 2%, and the number of particles with a diameter greater than 1500 nm in a region of 250 $\mu m^2$ is 2.

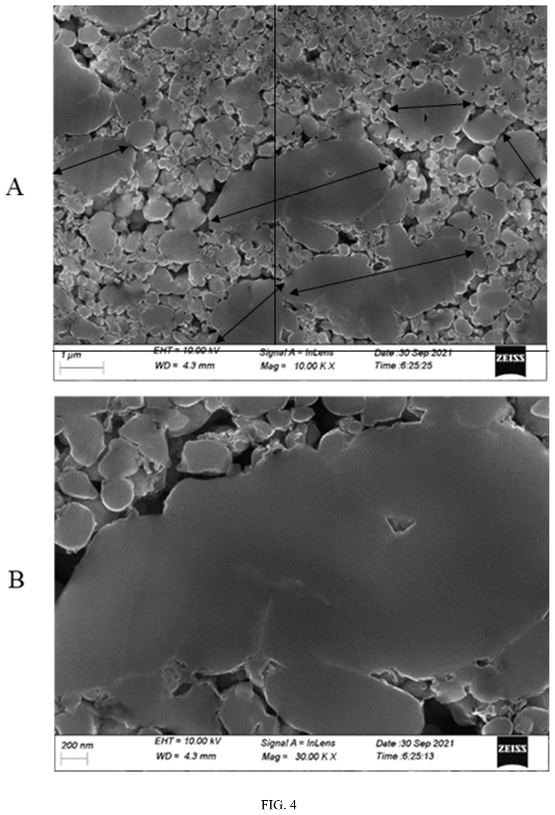

FIG. 4A and FIG. 4B show scanning electron microscope photographs of a cross section obtained by cutting the positive electrode plate prepared in Comparative Example 1 by using an argon ion beam, clearly showing a high content of fine powder and oversized primary particles.

FIG. 13 shows a scanning electron microscope photograph of a cross section obtained by cutting the positive electrode plate prepared from the positive electrode active material in Example 15 by using an argon ion beam, clearly showing good particle size uniformity of the primary particles.

Table 1 shows the parameters of the positive electrode active materials and batteries prepared in the examples and comparative examples, and Table 2 shows the particle size $D_v50$ of the positive electrode active material ($\mu$m), the particle size distribution concentration $(D_v90-D_v10)/D_v50$, the fine powder particle size distribution (proportion % of fine powder particles with a particle size of 80-180 nm), the number of large particles (the number of primary particles with a particle size greater than 1500 nm in a region of 250 $\mu$m$^2$), the particle size distribution index (particle size distribution index of primary particles having a primary particle size greater than 100 nm and less than or equal to 1500 nm in a region of 250 $\mu$m$^2$ in a cross section obtained by cutting the positive electrode plate), the carbon distribution uniformity evaluation results, and the capacity retention rate test results of the secondary batteries after 1000 cycles at 25°C and 60°C in Table 1.

Table 1

| Example No. | Raw materials | | Preparation method | | | | | | | |
|---|---|---|---|---|---|---|---|---|---|---|
| | M source | Forming aid (%) | Average particle size of granulation (mm) | Compacted density (g/cm³) | Loading height (cm) | Mass fraction of carbon source during pre-sintering | $D_v50$ of intermediate product (μm) | $D_v10$ of intermediate product (μm) | Sintering temperature (°C) | Constant-temperature sintering time (h) |
| Example 1 | Titanium dioxide | 1 | 10 | 1.2 | 12 | / | / | / | 750 | 6 |
| Example 2 | Titanium dioxide | 1 | 3 | 1.2 | 12 | / | / | / | 750 | 6 |
| Example 3 | Titanium dioxide | 1 | 30 | 1.2 | 12 | / | / | / | 750 | 6 |
| Example 4 | Titanium dioxide | 1 | 10 | 1.2 | 5 | / | / | / | 750 | 6 |
| Example 5 | Titanium dioxide | 1 | 10 | 1.2 | 30 | / | / | / | 750 | 6 |
| Example 6 | Titanium dioxide | 1 | 10 | 1.2 | 12 | / | / | / | 750 | 6 |
| Example 7 | Titanium dioxide | 1 | 10 | 1.2 | 12 | / | / | / | 750 | 6 |
| Example 8 | Titanium dioxide | 1 | 10 | 1.2 | 12 | / | / | / | 750 | 6 |
| Example 9 | Titanium dioxide | 1 | 10 | 1 | 12 | / | / | / | 750 | 6 |
| Example 10 | Titanium dioxide | 1 | 10 | 2.5 | 12 | / | / | / | 750 | 6 |
| Example 11 | Magnesium hydroxide | 1 | 10 | 1.2 | 12 | / | / | / | 750 | 6 |
| Example 12 | Vanadium pentoxide | 1 | 10 | 1.2 | 12 | / | / | / | 750 | 6 |
| Example 13 | / | 1 | 10 | 1.2 | 12 | / | / | / | 750 | 6 |

| Example No. | Raw materials | | Preparation method | | | | | | | |
|---|---|---|---|---|---|---|---|---|---|---|
| | M source | Forming aid (%) | Average particle size of granulation (mm) | Compacted density (g/cm³) | Loading height (cm) | Mass fraction of carbon source during pre-sintering | $D_v$50 of intermediate product ($\mu$m) | $D_v$10 of intermediate product ($\mu$m) | Sintering temperature (°C) | Constant-temperature sintering time (h) |
| Example 14 | Titanium dioxide | 1 | 10 | 1.6 | 12 | 2.00% | 0.5 | 0.12 | 750 | 6 |
| Example 15 | Titanium dioxide | 1 | 10 | 1.6 | 10 | 2.00% | 0.5 | 0.15 | 750 | 6 |
| Example 16 | Titanium dioxide | 1 | 10 | 1.6 | 8 | 2.00% | 0.5 | 0.18 | 750 | 6 |
| Comparative Example 1 | Titanium dioxide | 1 | / | / | 12 | / | / | / | 750 | 6 |
| Comparative Example 2 | Titanium dioxide | 0 | / | / | 12 | / | / | / | 750 | 6 |
| Comparative Example 3 | Titanium dioxide | 1 | 0.5 | 1.2 | 12 | / | / | / | 750 | 6 |
| Comparative Example 4 | Titanium dioxide | 1 | 45 | 1.2 | 12 | / | / | / | 750 | 6 |
| Comparative Example 5 | Titanium dioxide | 0 | 10 | 1.2 | 12 | / | / | / | 750 | 6 |
| Comparative Example 6 | Titanium dioxide | 1 | 10 | 1.2 | 12 | / | / | / | 750 | 6 |
| Comparative Example 7 | Titanium dioxide | / | / | / | / | / | / | / | 700 | 10 |

**Table 2**

| Example No. | Positive electrode material | | | | | | Cycling performance of battery | |
|---|---|---|---|---|---|---|---|---|
| | $D_v50$ ($\mu$m) | $(D_v90-D_v10)/D_v50$ | Fine powder particle size distribution | Number of large particles | Particle size distribution index | Carbon distribution uniformity | (Capacity retention rate) at 25°C | (Capacity retention rate) at 60°C |
| Example 1 | 1 | 1.5 | 1.9 | 2 | 0.39 | Relatively good | 93.0% | 87.30% |
| Example 2 | 1.1 | 2.3 | 6 | 6 | 0.48 | Good | 92.4% | 85.20% |
| Example 3 | 1.3 | 2.4 | 8 | 5 | 0.42 | Good | 92.9% | 86.30% |
| Example 4 | 1 | 1.2 | 3 | 2 | 0.36 | Relatively good | 94.8% | 88.70% |
| Example 5 | 1 | 2.8 | 8.5 | 8 | 0.53 | Good | 91.8% | 84.80% |
| Example 6 | 0.45 | 1.4 | 6 | 1 | 0.57 | Relatively good | 91.3% | 84.10% |
| Example 7 | 0.6 | 2 | 4 | 2 | 0.54 | Relatively good | 91.8% | 84.40% |
| Example 8 | 1.5 | 2.9 | 2 | 7 | 0.44 | Relatively good | 92.5% | 88.20% |
| Example 9 | 1 | 2.2 | 7 | 4 | 0.40 | Good | 92.5% | 86.60% |
| Example 10 | 1 | 2.6 | 8 | 12 | 0.49 | Good | 91.9% | 84.80% |
| Example 11 | 1 | 1.5 | 3 | 3 | 0.40 | Relatively good | 92.9% | 87.10% |
| Example 12 | 1 | 1.5 | 3 | 4 | 0.42 | Relatively good | 92.7% | 86.30% |
| Example 13 | 1 | 1.5 | 3 | 3 | 0.43 | Relatively good | 92.8% | 86.30% |
| Example 14 | 1 | 1.4 | 1.5 | 1.8 | 0.42 | Relatively good | 93.6% | 88.60% |
| Example 15 | 1 | 1.3 | 1.4 | 1.7 | 0.35 | Relatively good | 93.8% | 89.20% |
| Example 16 | 1 | 1.2 | 1.2 | 1.6 | 0.25 | Relatively good | 94.1% | 89.60% |
| Comparative Example 1 | 1 | 6.87 | 30 | 16 | 0.75 | Relatively poor | 91.00% | 82.70% |
| Comparative Example 2 | 1 | 5.12 | 40 | 29 | 0.78 | Relatively poor | 88.00% | 78.70% |
| Comparative Example 3 | 1 | 6.1 | 11 | 20 | 0.68 | Poor | 89.20% | 81.20% |
| Comparative Example 4 | 1 | 5.8 | 16 | 25 | 0.7 | Poor | 90.40% | 82.50% |
| Comparative Example 5 | 1 | 6.3 | 12 | 17 | 0.62 | Poor | 91.20% | 83.20% |
| Comparative Example 6 | 3 | 5.5 | 1 | 22 | 0.69 | Relatively good | 89.3% | 83.80% |
| Comparative Example 7 | 1.08 | 2.8 | 35 | 25 | 0.76 | Relatively poor | 88.80% | 79.70% |

According to the above results, it can be seen that in the positive electrode active materials of Examples 1 to 16, the particle size distribution of the large particles and small particles is reduced, significantly improving the uniformity of charge-discharge reactions and cycling performance of the positive electrode active material.

FIG. 5 shows cycle curves of Example 1 and Comparative Example 1 at 25°C and 60°C (parallel testing of 2 samples). It can be seen that the secondary battery prepared in Example 1 exhibits significantly improved cycling performance at both room temperature and high temperature compared to the secondary battery prepared in Comparative Example 1.

The positive electrode plates in Examples 1 to 16 each include a current collector and a positive electrode film layer disposed on at least one side of the current collector, where the positive electrode film layer includes a positive electrode active material, the positive electrode active material includes a substrate and a carbon coating layer disposed on a surface of the substrate, at least a portion of the positive electrode active material includes primary particles, a particle size distribution of primary particles having a primary particle size greater than 80 nm and less than or equal to 180 nm in the positive electrode active material is less than or equal to 10%, and there are no more than 15 primary particles having a primary particle size greater than 1500 nm in a region of $(250\pm5)$ $\mu m^2$ in a cross section obtained by cutting the positive electrode plate. As compared to Comparative Example 7 and compared to the positive active material in the prior art, in Examples 1 to 16, the particle size distribution of primary particles having a primary particle size greater than 80 nm and less than or equal to 180 nm is 35%, and there are 25 primary particles having a primary particle size greater than 1500 nm in a region of $(250\pm5)$ $\mu m^2$ in a cross section obtained by cutting the positive electrode plate. As compared to Comparative Example 7, the use of the positive electrode active material and positive electrode plate of this application can increase the cycling capacity retention rate of the battery at both room temperature and high temperature, thereby improving the room-temperature cycling performance and high-temperature cycling performance of the battery. Based on the comparison between Examples 1 to 16 and Comparative Examples 1 to 7, the use of the positive electrode active material and positive electrode plate of this application can improve the room-temperature cycling capacity retention rate and high-temperature cycling capacity retention rate of the battery, thereby improving the room-temperature cycling performance and high-temperature cycling performance of the battery.

From the comparison of Examples 1, 3, 4, 8, 9, and 11 to 16 with Examples 2, 5 to 7, and 10, it can be seen that in the positive electrode active material, the particle size distribution index of the primary particles having a primary particle size greater than 100 nm and less than or equal to 1500 nm in a region of $(250\pm5)$ $\mu m^2$ in a cross section obtained by cutting the positive electrode plate being less than or equal to 0.45 can further improve the room-temperature cycling performance and high-temperature cycling performance of the battery. From the comparison of Examples 4, and 15 to 16 with Examples 1 to 3, and 5 to 14, it can be seen that in the positive electrode active material, the particle size distribution index of the primary particles having a primary particle size greater than 100 nm and less than or equal to 1500 nm in a region of $(250\pm5)$ $\mu m^2$ in a cross section obtained by cutting the positive electrode plate being less than or equal to 0.36 can further improve the room-temperature cycling capacity retention rate and high-temperature cycling capacity retention rate of the battery.

In Examples 1 to 3, the average particle size of compacting and granulating is adjusted. As compared to Comparative Examples 3 and 4, when the average particle size of compacting and granulating is within the range of 3-30 mm, the material exhibits good breathability during sintering, the particles are heated uniformly, the carbon content uniformity is good, and the cycling performance of the battery is significantly improved. Excessively large average particle size and excessively small average particle size of compacting and granulating are both not conducive to controlling the fine powder particle size distribution and the number of large particles.

In Examples 4 and 5, the loading height of the compacted granules during sintering is adjusted. When the loading height is within the range of 5-30 cm, the material exhibits good breathability during sintering, the particles are heated uniformly, uniform carbon distribution is achieved, granule growth consistency is good, and the cycling performance of the battery is significantly improved. This is also conducive to achieving good productivity.

In Examples 6 to 8, the value of $D_v50$ of the pulverized positive electrode active material is adjusted. As compared to Comparative Example 6, when the value of $D_v50$ is within the range of 0.45-1.5 $\mu m$, the particle size of the positive electrode active material particles is small, and the particles include at least some nanoscale primary particles, which is conducive to the deintercalation and intercalation of the active material lithium ions. In addition, $(D_v90-D_v10)/D_v50$ of the obtained positive electrode active material powder is less than 3, indicating a high particle size distribution concentration. Excessively small $D_v50$ and excessively large $D_v50$ can both lead to deterioration of the cycling performance. Excessively small $D_v50$ results in a small overall particle size, increasing the proportion of small particles, and reducing the surface stability of the material; and excessively large $D_v50$ results in a small overall particle size, increasing the proportion of large particles, and enhancing the particle fracture effect during cycling. Both cases are not conducive to improving the material stability.

In Examples 9 and 10, the compacted density of compacting and granulating is adjusted. A compacted density within the range of 1-2.5 $g/cm^3$ is conducive to improving the sintering productivity. As compared to Comparative Examples 1 and 2, an excessively low compacted density or the absence of compacting and granulating treatment is not conducive to the particle size uniformity and carbon distribution uniformity.

In Examples 11 to 13, the reaction raw materials of doping elements are adjusted. It can be seen that the preparation method provided by this application is applicable to different doping elements as well as phosphate-based positive electrode active materials without doping elements. Doped phosphate-based positive electrode active materials prepared using magnesium hydroxide and vanadium pentoxide exhibit particle size distribution and electrical performance similar to those of the doped phosphate-based positive electrode active materials prepared using titanium dioxide. The phosphate-based positive electrode active materials prepared without doping elements in the examples also exhibit good particle size distribution and electrical performance.

Compared to Comparative Example 1, the positive electrode active material prepared without compacting and granulating treatment in Examples 1 to 13 has low particle size distribution concentration and poor carbon content uniformity. As compared to Comparative Example 5, adding a forming aid to the raw materials helps to increase the particle size distribution concentration, and improved chemical and mechanical properties also help to improve the cycling performance of the battery.

It should be noted that this application is not limited to the foregoing embodiments. The above embodiments are only examples, and embodiments having substantially the same configuration and achieving the same effects as the technical ideas within the scope of the technical solutions of this application are included in the technical scope of this application. Additionally, without departing from the principle of this application, various modifications that can be conceived by those skilled in the art applied to the embodiments, and other forms constructed by combining some of the constituent elements in the embodiments, are also included in the scope of this application.

**Claims**

1. A positive electrode plate, **characterized by** comprising a current collector and a positive electrode film layer disposed on at least one side of the current collector, wherein the positive electrode film layer comprises a positive electrode active material; the positive electrode active material comprises a substrate and a carbon coating layer disposed on a surface of the substrate; and the substrate has a general formula $Li_zFe_xMn_{(1-x-y)}M_yPO_4$, wherein $1 \leq z \leq 1.1$, $0.5 \leq x \leq 1$, $0 \leq y \leq 0.1$, and M is at least one selected from Ti, V, and Mg;

   at least a portion of the positive electrode active material comprises primary particles, and a particle size distribution of primary particles having a primary particle size greater than 80 nm and less than or equal to 180 nm in the positive electrode active material is less than or equal to 10%; and
   there are no more than 15 primary particles having a primary particle size greater than 1500 nm in a region of $(250 \pm 5)$ $\mu m^2$ in a cross section obtained by cutting the positive electrode plate.

2. The positive electrode plate according to claim 1, **characterized in that** the particle size distribution of primary particles having a primary particle size greater than 80 nm and less than or equal to 180 nm in the positive electrode active material is less than or equal to 8.5%.

3. The positive electrode plate according to claim 1 or 2, **characterized in that** in the positive electrode active material, there are no more than 12 primary particles having a primary particle size greater than 1500 nm in a region of $(250 \pm 5)$ $\mu m^2$ in a cross section obtained by cutting the positive electrode plate.

4. The positive electrode plate according to any one of claims 1 to 3, **characterized in that** primary particles having a primary particle size greater than 100 nm and less than or equal to 1500 nm have a particle size distribution index less than or equal to 0.45 in a region of $(250 \pm 5)$ $\mu m^2$ in a cross section obtained by cutting the positive electrode plate, optionally less than or equal to 0.36,
   wherein the particle size distribution index is a ratio of a standard deviation of the primary particle size of the primary particles to an average primary particle size.

5. The positive electrode plate according to any one of claims 1 to 4, **characterized in that** the positive electrode active material comprises secondary particles, wherein a particle size distribution of the secondary particles satisfies: $(D_v90 - D_v10)/D_v50 \leq 3$.

6. The positive electrode plate according to claim 5, **characterized in that** $D_v50$ of the secondary particles is 0.45-1.5 $\mu m$.

7. The positive electrode plate according to any one of claims 1 to 6, **characterized in that**

0.6<x≤1, 0≤y≤0.1, and 1≤z≤1.1; and
a mass content of the M element in the positive electrode active material is 1000 ppm-6000 ppm.

8. A preparation method of a positive electrode plate, **characterized in that** the preparation method specifically comprises:

compacting and granulating: compacting and granulating raw materials comprising a lithium source, an iron source, a manganese source, a phosphorus source, a carbon source, an M source, and a forming aid to obtain compacted granules;
sintering: loading the compacted granules and sintering the compacted granules to obtain secondary particles;
pulverizing: pulverizing the secondary particles to obtain a positive electrode active material; and
coating: applying a positive electrode slurry containing the positive electrode active material onto at least one side of a current collector to form a positive electrode plate,
wherein the positive electrode active material comprises a substrate and a carbon coating layer disposed on a surface of the substrate, and the substrate has a general formula $Li_zFe_xMn_{(1-x-y)}M_yPO_4$, wherein $0.5 \leq x \leq 1$, $0 \leq y \leq 0.1$, $1 \leq z \leq 1.1$, and M is at least one selected from Ti, V, and Mg;
at least a portion of the positive electrode active material comprises primary particles, and a particle size distribution of primary particles having a primary particle size greater than 80 nm and less than or equal to 180 nm in the positive electrode active material is less than or equal to 10%; and
there are no more than 15 primary particles having a primary particle size greater than 1500 nm in a region of (250 ±5) $\mu m^2$ in a cross section obtained by cutting the positive electrode plate.

9. The preparation method according to claim 8, **characterized in that** an average particle size of the compacted granules in the compacting and granulating step is 3 mm-30 mm.

10. The preparation method according to claim 8 or 9, **characterized in that** a compacted density of the compacted granules is 1.0 $g/cm^3$ or higher, or 1.2-3.0 $g/cm^3$.

11. The preparation method according to any one of claims 8 to 10, **characterized in that** the sintering step specifically comprises loading the compacted granules to a loading height of 5 cm-30 cm and sintering the compacted granules to obtain secondary particles.

12. The preparation method according to any one of claims 8 to 11, **characterized in that** the pulverizing step specifically comprises pulverizing the secondary particles to achieve a $D_v50$ of 0.45 $\mu m$-1.5 $\mu m$; and
pulverizing the secondary particles to achieve a particle size distribution satisfying: $(D_v90-D_v10)/D_v50 \leq 3$.

13. The preparation method according to any one of claims 8 to 12, **characterized in that** a sintering temperature in the sintering step is 600°C-800°C; and/or, a constant-temperature sintering time in the sintering step is 2 h-12 h.

14. The preparation method according to any one of claims 8 to 13, **characterized in that** the compacting and granulating step specifically comprises:
grinding raw materials comprising a lithium source, an iron source, a manganese source, a phosphorus source, a carbon source, an M source, a forming aid, and a solvent to obtain a slurry; drying the slurry; and then compacting and granulating the slurry to obtain compacted granules.

15. The preparation method according to any one of claims 8 to 13, **characterized in that** the compacting and granulating step specifically comprises:

(1-1) uniformly mixing initial reactants comprising a lithium source, an iron source, a manganese source, a phosphorus source, a carbon source, and an M source, followed by pre-sintering to obtain an initial product;
(1-2) mixing and grinding intermediate reactants comprising the initial product, a carbon source, and a forming aid to obtain an intermediate product; and
(2) compacting and granulating the intermediate product to obtain compacted granules,
wherein a mass content of the carbon source in step (1-1) is 2%-5%, based on a total mass of the initial reactants.

16. The preparation method according to claim 15, **characterized in that** $D_v50$ of the intermediate product is 0.45 $\mu m$-1.25 $\mu m$, and $D_v10$ of the intermediate product is greater than or equal to 0.15 $\mu m$.

17. A secondary battery, **characterized by** comprising a negative electrode plate, a separator, an electrolyte, and the positive electrode plate according to any one of claims 1 to 7 or a positive electrode plate prepared by the preparation method according to any one of claims 8 to 16.

18. An electric apparatus, **characterized by** comprising the secondary battery according to claim 17.

FIG. 1

FIG. 2

FIG. 3

FIG. 4

FIG. 5

FIG. 6

5

53

52

52

51

FIG. 7

4

5   5

5

FIG. 8

FIG. 9

FIG. 10

FIG. 11

FIG. 12

FIG. 13

## INTERNATIONAL SEARCH REPORT

| | International application No. |
|---|---|
| | **PCT/CN2023/124793** |

| A. | CLASSIFICATION OF SUBJECT MATTER |
|---|---|

H01M4/36(2006.01)i;  H01M10/0525(2010.01)i

According to International Patent Classification (IPC) or to both national classification and IPC

| B. | FIELDS SEARCHED |
|---|---|

Minimum documentation searched (classification system followed by classification symbols)

    IPC:  H01M4/-;  H01M10/-

Documentation searched other than minimum documentation to the extent that such documents are included in the fields searched

Electronic data base consulted during the international search (name of data base and, where practicable, search terms used)

    CNTXT, ENTXTC, CNKI, ENTXT, ISI_Web of Science: 二次电池, 正极, 活性材料, 碳包覆, 基材, 压实, 振实, 烧结, 涂布, secondary battery, positive pole, active material, active material, carbon

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116259736 A (NINGDE CONTEMPORARY AMPEREX TECHNOLOGY CO., LTD. et al.) 13 June 2023 (2023-06-13)<br>claims 1-18, and description, paragraphs 2-38 | 1-18 |
| X | CN 115513515 A (SUNWODA ELECTRIC VEHICLE BATTERY CO., LTD.) 23 December 2022 (2022-12-23)<br>description, paragraphs 12-20, 25, 27, 39, 42, 45, 53, 54 and 163, embodiment 1, and tables 1 and 2 | 1-18 |
| X | US 2015188139 A1 (HITACHI METALS LTD.) 02 July 2015 (2015-07-02)<br>claims 1-37 | 1-18 |
| X | CN 102881902 A (SHANDONG HETER ELECTRONICS NEW MATERIALS CO., LTD.) 16 January 2013 (2013-01-16)<br>description, paragraphs 5-10 | 9 |
| A | KR 20210009468 A (SK INNOVATION CO., LTD. et al.) 27 January 2021 (2021-01-27)<br>entire document | 1-18 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 November 2023** | **08 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/124793**

| Patent document cited in search report | | | Publication date (day/month/year) | Patent family member(s) | | | Publication date (day/month/year) |
|---|---|---|---|---|---|---|---|
| CN | 116259736 | A | 13 June 2023 | None | | | |
| CN | 115513515 | A | 23 December 2022 | None | | | |
| US | 2015188139 | A1 | 02 July 2015 | JP | 6094584 | B2 | 15 March 2017 |
| | | | | KR | 20150047477 | A | 04 May 2015 |
| | | | | WO | 2014/017617 | A1 | 30 January 2014 |
| | | | | US | 2015188139 | A1 | 02 July 2015 |
| | | | | CN | 104584282 | A | 29 April 2015 |
| CN | 102881902 | A | 16 January 2013 | None | | | |
| KR | 20210009468 | A | 27 January 2021 | None | | | |

Form PCT/ISA/210 (patent family annex) (July 2022)

**EP 4 712 160 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310542575